# FASCICULE DE BREVET EUROPEEN

(11) **EP 3 648 947 B1**
(45) Date de publication et mention de la délivrance du brevet: **31.08.2022**
(21) Numéro de dépôt: 18752547.2
(22) Date de dépôt: 02.07.2018
(51) Int. Cl.: B29B 7/00, B29C 48/40, B29C 48/405, B29C 48/76, C08G 18/10, C09J 175/08, C09J 201/10, B29B 7/48, B29B 7/60, B29B 7/84, B29C 48/625

(54) **PREPARATION D'UNE COMPOSITION ADHESIVE DANS UNE EXTRUDEUSE**
HERSTELLUNG EINER KLEBSTOFFZUSAMMENSETZUNG IN EINEM EXTRUDER
PRODUCTION OF AN ADHESIVE COMPOSITION IN AN EXTRUDER

(30) Priorité: 04.07.2017 FR 1756297
(43) Date de publication de la demande: 13.05.2020
(73) Titulaire: Bostik SA, 92700 Colombes (FR)
(72) Inventeur: GRISOT-SAULE, Myriam, 60200 Compiegne (FR); QUINEBECHE, Sébastien, 27300 Bernay (FR)
(74) Mandataire: Bandpay & Greuter
(86) Numéro de dépôt international: PCT/FR2018/051633
(87) Numéro de publication internationale: WO 2019/008258

(56) Documents cités:
- EP-A1- 1 724 321
- EP-A1- 2 393 861
- EP-A1- 2 886 575
- WO-A1-00/37534
- WO-A1-96/34028
- US-A1- 2014 027 056

## Description

### DOMAINE DE L'INVENTION

La présente invention concerne un procédé de préparation d'une composition adhésive à base de prépolymère(s) silylé(s) et de plastifiant(s), et notamment de résine(s) tackifiante(s).

### ARRIERE-PLAN TECHNIQUE

Les adhésifs sensibles à la pression (également dénommés colles auto-adhésives ou encore, en anglais, « *Pressure Sensitive Adhesives* » ou PSA) sont des substances conférant au support qui en est revêtu un pouvoir collant immédiat à température ambiante (souvent désigné sous le terme de « *tack* »), lequel permet son adhésion instantanée à un substrat sous l'effet d'une pression légère et brève. Les PSA sont largement utilisés pour la fabrication d'étiquettes auto-adhésives qui sont fixées sur des articles à des fins de présentation d'informations (telles que code barre, dénomination, prix) et/ou à des fins décoratives. Les PSA sont également mis en œuvre pour la fabrication de rubans auto-adhésifs d'utilisations variées. On peut citer par exemple, outre le ruban adhésif transparent largement utilisé dans la vie quotidienne : la mise en forme et l'assemblage d'emballages en carton, la protection de surfaces pour les travaux de peinture dans la construction, le maintien de câbles électriques dans l'industrie des transports et le collage des moquettes par rubans adhésifs à double face.

Il existe un domaine d'application des PSA pour lequel il est souhaitable que le pouvoir adhésif des étiquettes et/ou rubans sur le substrat soit également maintenu lorsque le joint de colle assurant la fixation est exposé (de même, par conséquent, que l'article revêtu de l'étiquette et/ou du ruban) à une température susceptible de varier dans un large domaine. On peut citer à titre d'exemple la pose d'étiquettes sur certains organes des automobiles (ou autres véhicules) situés à proximité du moteur, ou sur des emballages conçus pour recevoir durant leur conditionnement un liquide chaud, ou encore sur des articles (tels les pneumatiques) qui sont étiquetés à chaud, au sortir des chaînes de fabrication. On peut également citer la mise en œuvre de rubans auto-adhésifs pour l'assemblage de pièces pour lesquelles une bonne tenue thermique est nécessaire comme dans le cas, par exemple, de l'habillage intérieur des avions ou autres véhicules.

Les PSA utilisés pour ces domaines d'application comprennent souvent des polymères de type acrylate de masse molaire très élevée se présentant soit sous forme d'émulsions aqueuses soit sous forme solvantée. Toutefois, ce type de composition comporte certaines contraintes : il est nécessaire de prévoir une étape de séchage et d'évaporation de l'eau ou du solvant, ces compositions posent des problèmes d'hygiène et sécurité en raison de la présence de solvant organique et leur nature rend très compliquée la fabrication d'étiquettes et/ou de rubans de grammage supérieur à 70 g/m², le grammage étant la quantité de PSA appliquée en continu sur un support, notamment pour la fabrication d'étiquettes et/ou rubans adhésifs.

Une autre méthode consiste à utiliser des composés de type thermofusibles réticulables tels que décrits dans le document WO 2012/090151.

Les documents EP 2235133 et EP 2336208 décrivent de telles compositions thermofusibles réticulables, avec une caractéristique PSA donnant un pouvoir adhésif stable en température après réticulation à chaud et à l'humidité. Ces PSA sont obtenus par mélange d'un prépolymère, de type polyéther ou polyéther-polyuréthane, comprenant 2 groupements terminaux de type alkoxysilane hydrolysables, d'une résine tackifiante compatible et d'un catalyseur de réticulation. Ces compositions adhésives sont préparées selon un procédé discontinu (ou « *batch* ») comprenant une première étape de mélange entre 50 et 170°C, à l'abri de l'air et de préférence sous atmosphère inerte, du prépolymère à groupements terminaux alkoxysilane avec la résine tackifiante, une seconde étape de refroidissement du mélange à une température comprise entre 50 et 90°C, et une troisième étape d'incorporation du catalyseur, entre 50 et 90°C, dans le mélange préalablement obtenu.

Un tel procédé de préparation présente cependant plusieurs inconvénients. En effet, compte tenu de la présence d'eau (typiquement entre 3000 et 5000 ppm) dans les résines tackifiantes utilisées dans ces compositions PSA réticulables à chaud, il est fort probable de constater, localement, discrètement, de façon inhomogène ou au contraire dans la masse entière du produit, une réticulation prématurée, non désirée et non contrôlée des chaînes moléculaires. Cette réticulation apparaît au cours du mélange ou bien lors du stockage de la composition en containers au cours du temps, la composition étant potentiellement soumise à des températures ambiantes élevées, avant le procédé de mise en œuvre pour la fabrication d'enductions PSA réticulées. Elle n'est pas souhaitée car elle génère des changements physiques, comme la présence de petites particules inhomogènes fortement réticulées, ou comme une augmentation de la viscosité de l'adhésif à mettre en œuvre qui nécessite des ajustements sur les machines d'enduction. Pour éviter ces problèmes, il est souvent alors nécessaire, au début des opérations de mélangeage en batch, de les déshydrater au préalable en les chauffant entre 130 et 180°C sous vide pendant plusieurs heures. En outre, malgré une possible addition d'une combinaison d'antioxydants durant cette étape, les températures élevées auxquelles sont soumises les résines tackifiantes génèrent une dégradation des résines, celle-ci se traduisant par une quantité accrue de composés organiques volatiles (COV) dans la composition PSA finale. L'application de ces températures élevées peut également entraîner une dégradation des blocs polyéther des polymères silylés. De plus, l'étape de déshydratation sous vide ne permet pas d'éliminer correctement l'eau naturellement présente dans les résines qui peuvent encore contenir de 500 à 600 ppm d'eau résiduelle après une heure de maintien sous vide à 160°C. La présence d'eau est gênante pour la stabilité au stockage de la composition PSA ainsi préparée, ainsi que la présence de COV, pour la qualité des applications finales visées (rubans et/ou étiquettes adhésives). Un autre inconvénient intrinsèque à la fabrication de la composition adhésive réticulable à chaud selon un procédé batch est la nécessité de trouver le meilleur compromis entre la température d'addition du catalyseur et la viscosité du milieu. Idéalement, pour éviter d'amorcer la réaction de réticulation, l'introduction du catalyseur devrait être réalisée à basse température, soit à une température inférieure à 70°C, mais, dans ces conditions, la trop forte viscosité du milieu rend extrêmement difficile voire impossible la dispersion et la bonne homogénéisation de celui-ci dans le milieu. Cela nécessite donc de travailler à des températures pour lesquelles l'activité du catalyseur est non nulle et le choix et la quantité de catalyseur sont très limités compte tenu de ces contraintes. En outre, le temps de mélangeage sous atmosphère inerte, puis de vidange des cuves de mélange, est long, et peut atteindre plusieurs heures, qui sont potentiellement au détriment de la stabilité thermique des matériaux, notamment en ce qui concerne une préréticulation non contrôlée.

Le document CN 102827568 décrit un procédé de préparation continu à l'aide d'une extrudeuse bi-vis d'une composition de mastic réticulable à l'humidité à base d'un polymère silylé, d'un plastifiant, d'un agent stabilisateur, d'un agent thixotropique et d'une charge inorganique (carbonate de calcium).

Le document CN 103331891 divulgue un procédé de préparation à l'aide d'une extrudeuse bi-vis d'une composition HMPSA (« Hot Melt Pressure Sensitive Adhesives » ou adhésifs thermofusibles sensibles à la pression) non réactive comprenant un copolymère styrène bloc de type styrène-isoprène-styrène (SIS), une huile plastifiante, une résine tackifiante et un antioxydant.

Le document US 8,431,675 décrit une méthode de préparation d'un polyuréthane silylé et des compositions adhésives comprenant ce polymère.

Le document WO 2007/037824 décrit un procédé de préparation continu, dans un réacteur, de polymères polyuréthane silylés pouvant être utilisés pour produire des joints, des adhésifs et des revêtements.

Le document EP 2393861 décrit des compositions réticulables à l'humidité comprenant un polymère silylé et pouvant comprendre des composants additionnels, tel qu'un plastifiant ou un agent tackifiant. Lorsque ces compositions sont préparées selon un procédé continu, les composants peuvent être mélangés dans une extrudeuse, notamment sous vide.

Le document EP 2886575 décrit des compositions adhésives comprenant un polymère silylé et une charge, pour l'assemblage d'une cuve et d'une structure porteuse choisie parmi la coque d'un navire, la carlingue d'un avion et un conteneur.

Toutefois, aucun des documents cités ci-dessus ne décrit de procédé de préparation d'une composition adhésive à base de polymère silylé et de résine tackifiante permettant une déshydratation performante de la résine tackifiante.

Il existe donc un réel besoin de fournir un procédé de préparation de compositions PSA à base de prépolymère silylé et plastifiant (tel qu'une résine tackifiante) permettant une préparation plus rapide avec un temps de séjour moins long et à plus basse température, et permettant une déshydratation plus efficace du (ou des) plastifiant(s).

### RESUME DE L'INVENTION

L'invention, définie par l'objet de la revendication 1, concerne un procédé de préparation d'une composition adhésive, à l'aide d'une extrudeuse comprenant au moins deux vis rotatives, comprenant successivement :
- l'introduction d'au moins un plastifiant dans l'extrudeuse ;
- le dégazage du plastifiant dans l'extrudeuse ;
- l'introduction d'au moins un prépolymère silylé et le mélange de celui-ci avec le plastifiant dans l'extrudeuse ; et
- la décharge du mélange de l'extrudeuse.

Selon un mode de réalisation, l'extrudeuse est une extrudeuse bi-vis co-rotatives interpénétrées.

Selon un mode de réalisation, l'extrudeuse présente une géométrie définie par le rapport du diamètre externe des vis sur le diamètre interne des vis De/Di valant de 1,3 à 1,8, de préférence de 1,55 à 1,8.

Selon un mode de réalisation, l'extrudeuse présente une longueur définie par un multiple du diamètre D des vis valant de 28D à 100D, de préférence de 40D à 80D.

Selon un mode de réalisation, le prépolymère silylé possède une chaîne principale choisie parmi une chaîne principale polyéther, une chaîne principale polyéther-polyuréthane, une chaîne principale polyester, une chaîne principale polyester-polyuréthane, une chaîne principale polyéther-polyester-polyuréthane, une chaîne principale polyoléfine, une chaîne principale polyoléfine-polyuréthane, une chaîne principale polyéther-polyoléfine-polyuréthane, une chaîne principale polyacrylate et une chaîne principale polyéther-polyacrylate et comprend deux groupes terminaux alkoxysilanes hydrolysables, et de préférence le prépolymère silylé est un prépolymère de type polyéther ou polyéther-polyuréthane comprenant deux groupes terminaux alkoxysilanes hydrolysables.

Selon un premier mode de réalisation, le prépolymère silylé est un prépolymère ayant pour formule (I) : 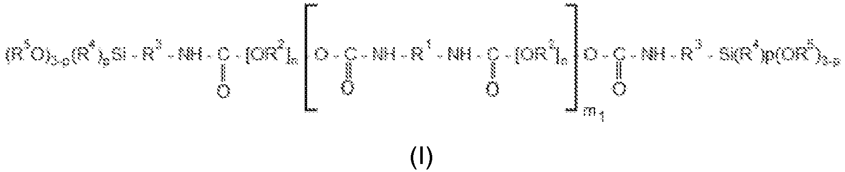 dans laquelle :
- R¹ représente un radical divalent hydrocarboné comprenant de 5 à 15 atomes de carbone qui peut être aromatique ou aliphatique, linéaire, ramifié ou cyclique ;
- R² représente un radical divalent alkylène linéaire ou ramifié comprenant de 1 à 4 atomes de carbone ;
- R³ représente un radical divalent alkylène linéaire comprenant de 1 à 3 atomes de carbone ;
- R⁴ et R⁵, identiques ou différents, représentent chacun un radical alkyle linéaire ou ramifié de 1 à 20 atomes de carbone, de préférence de 1 à 4, avec la possibilité lorsqu'il y a plusieurs radicaux R⁴ ou R⁵ que ceux-ci soient identiques ou différents ;
- n est un nombre entier tel que la masse molaire moyenne en nombre du bloc polyéther de formule -[OR²]ₙ- est comprise entre 300 Da et 30 kDa ;
- m₁ est un nombre entier nul ou non nul ;
- n et m1 sont tels que la masse molaire moyenne en nombre du polymère de formule (I) est comprise entre 600 Da et 60 kDa ;
- p est un nombre entier égal à 0, 1 ou 2 ;
et ayant de préférence une viscosité mesurée à 23°C allant de 25 à 100 Pa.s.

Selon un deuxième mode de réalisation, le prépolymère silylé est un polyéther ayant pour formule (VI) : 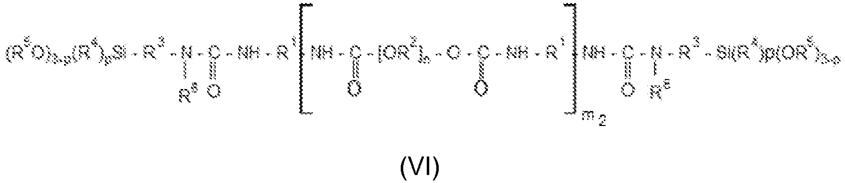 dans laquelle :
- R¹ représente un radical divalent hydrocarboné comprenant de 5 à 15 atomes de carbone qui peut être aromatique ou aliphatique, linéaire, ramifié ou cyclique ;
- R² représente un radical divalent alkylène linéaire ou ramifié comprenant de 1 à 4 atomes de carbone ;
- R³ représente un radical divalent alkylène linéaire comprenant de 1 à 3 atomes de carbone ;
- R⁴ et R⁵, identiques ou différents, représentent chacun un radical alkyle linéaire ou ramifié de 1 à 4 atomes de carbone, avec la possibilité lorsqu'il y a plusieurs radicaux R⁴ ou R⁵ que ceux-ci soient identiques ou différents ;
- R⁶ représente un atome d'hydrogène, un radical phényle, un radical 2-succinate ou un radical alkyle linéaire, ramifié ou cyclique comprenant de 1 à 6 atomes de carbone ;
- n est un nombre entier tel que la masse molaire moyenne en nombre du bloc polyéther de formule -[OR²]ₙ- est comprise entre 300 Da et 30 kDa ;
- m₂ est un nombre entier non nul ;
- n et m₂ sont tels que la masse molaire moyenne en nombre du polymère de formule (I) est comprise entre 600 Da et 60 kDa ;
- p est un nombre entier égal à 0, 1 ou 2 ;
et ayant de préférence une viscosité mesurée à 23°C allant de 25 à 100 Pa.s.

Selon un mode de réalisation, le plastifiant est ou comprend une résine tackifiante.

Selon un mode de réalisation, la résine tackifiante a une masse molaire moyenne en nombre comprise entre 200 Da et 10 kDa et est de préférence choisie parmi :
- (i) les résines obtenues par polymérisation d'hydrocarbures terpéniques et de phénols, en présence de catalyseurs de Friedel-Crafts ;
- (ii) les résines obtenues par un procédé comprenant la polymérisation d'alpha-méthyl styrène ;
- (iii) les colophanes d'origine naturelle ou modifiées, et leurs dérivés hydrogénés, dimérisés, polymérisés ou estérifiés par des monoalcools ou des polyols ;
- (iv) les résines obtenues par hydrogénation, polymérisation ou copolymérisation de mélanges d'hydrocarbures aliphatiques insaturés ayant environ 5, 9 ou 10 atomes de carbone issus de coupes pétrolières ;
- (v) les résines terpéniques ;
- (vi) les copolymères à base de terpènes naturels ; et
- (vii) les résines acryliques ayant une viscosité à 100°C inférieure à 100 Pa.s.

Selon un mode de réalisation, la quantité massique de prépolymère silylé vaut de 20 à 85%, de préférence 30 à 75%, et la quantité massique de plastifiant vaut de 15% à 80%, de préférence de 25% à 70%, par rapport à la masse de la composition adhésive.

Selon un mode de réalisation, la composition adhésive est dépourvue de catalyseur de réticulation.

Selon un mode de réalisation, la composition adhésive comprend un catalyseur de réticulation, le procédé comprenant l'introduction du catalyseur et son mélange avec le plastifiant et le prépolymère silylé, cette introduction étant de préférence effectuée dans l'extrudeuse, encore plus préférentiellement entre l'introduction du prépolymère silylé et la décharge.

Selon un mode de réalisation, la quantité massique de catalyseur de réticulation vaut de 0,01% à 8%, de préférence de 0,1% à 2%, par rapport à la masse de la composition adhésive.

Selon un mode de réalisation, le temps de séjour dans l'extrudeuse du plastifiant est de 0,1 à 3 minutes, de préférence de 0,5 à 2,5 min, encore plus préférentiellement de 1 à 2 min.

Selon un mode de réalisation, le plastifiant, après avoir subi le dégazage, contient une quantité massique d'eau inférieure ou égale à 500 ppm, de préférence inférieure ou égale à 300 ppm, de préférence inférieure ou égal à 200 ppm, encore plus préférentiellement inférieure ou égale à 100 ppm ; et/ou le plastifiant, avant le dégazage, contient une quantité massique d'eau supérieure ou égale à 500 ppm, de préférence supérieure ou égale à 1000 ppm, encore plus préférentiellement supérieure ou égale à 2000 ppm.

Selon un mode de réalisation, le procédé comprend en outre une ou plusieurs étapes d'introduction dans l'extrudeuse d'un ou plusieurs composés choisis parmi les antioxydants, les piégeurs d'humidité, les polymères thermoplastiques, les plastifiants, les huiles paraffiniques et naphténiques, les cires d'un homopolymère de polyéthylène, les cires d'un copolymère de polyéthylène et d'acétate de vinyle, les pigments, les colorants et les charges.

Selon un mode de réalisation, la température de l'extrudeuse lors du dégazage du plastifiant est de 5°C à 100°C au-dessus de la température de ramollissement bille et anneau (ou « *softening point ring and bail* » en anglais) du plastifiant mesurée selon la norme ISO 4625.

Selon un mode de réalisation, le procédé comprend en outre un ou plusieurs dégazages additionnels, et comprend de préférence au moins un dégazage additionnel après le mélange du prépolymère silylé avec le plastifiant.

Selon un mode de réalisation, la température de l'extrudeuse, depuis le point d'introduction du plastifiant jusqu'au point de décharge, augmente depuis la température ambiante jusqu'à une température maximale Tmax lors du dégazage du plastifiant, Tmax étant de préférence comprise entre 150°C et 220°C, de préférence encore entre 160°C et 180°C, plus préférentiellement entre 165°C et 175°C, et Tmax étant encore plus préférentiellement d'environ 170°C ; puis diminue jusqu'à une température finale Tf lors de la décharge comprise entre la température ambiante et Tmax, Tf étant de préférence comprise entre 20°C et 145°C, de préférence encore entre 120°C et 140°C, et Tf étant encore plus préférentiellement d'environ 130°C.

Selon un mode de réalisation, la température de l'extrudeuse lors du mélange du prépolymère avec le plastifiant Tm est comprise entre Tf et Tmax, Tm étant de préférence comprise entre 130°C et 170°C, de préférence encore entre 140°C et 160°C, plus préférentiellement entre 145°C et 155°C, Tm étant encore plus préférentiellement d'environ 150°C.

La présente invention permet de surmonter les inconvénients de l'état de la technique. Elle fournit plus particulièrement un procédé de préparation d'une composition adhésive à base de prépolymère(s) silylé(s) et de plastifiant(s), de préférence de résine(s) tackifiante(s), qui est mis en œuvre à des températures relativement faibles et pendant une courte durée, ce qui réduit les risques de dégradation du (des) plastifiant(s) et/ou du (des) prépolymère(s) silylé(s). La teneur en eau introduite dans la composition est très faible, ce qui permet de limiter fortement les risques de réticulation prématurée.

Cela est accompli grâce à l'utilisation d'une extrudeuse, avec une séquence particulière d'étapes.

### BREVE DESCRIPTION DES FIGURES

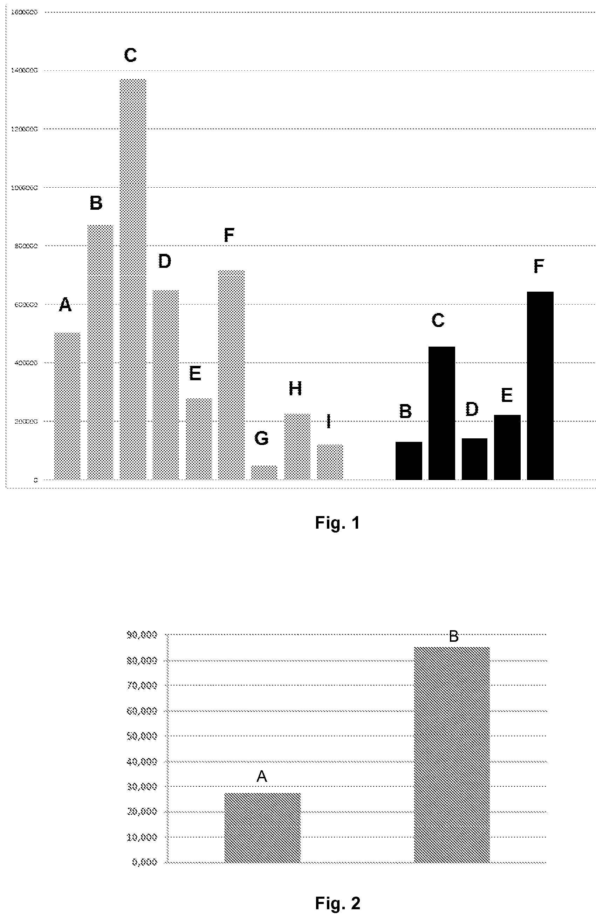

La **figure 1** représente la teneur en COV d'une résine tackifiante brute (diagramme en bâton gris) et d'une résine préalablement mélangée à l'aide d'une extrudeuse bi-vis (diagramme en bâton noir), mesurée par chromatographie en phase gazeuse couplée à la spectrométrie de masse. L'axe des ordonnées représente le rapport aire/masse de l'échantillon.
La **figure 2** représente la teneur en COV d'une composition PSA obtenue par le procédé selon l'invention décrit dans l'exemple 3 (A) et celle d'une composition PSA industrielle préparée selon un procédé batch (B), mesurée par chromatographie en phase gazeuse couplée à la spectrométrie de masse. L'axe des ordonnées représente la teneur en COV totale divisée par 10 (en ppm).

### DESCRIPTION DE MODES DE REALISATION DE L'INVENTION

Dans la présente description, sauf indication expresse différente, tous les pourcentages (%) indiqués sont des pourcentages en masse.

Les masses molaires moyennes en nombre et en poids sont exprimées en Dalton (Da) et peuvent être déterminées par chromatographie d'exclusion stérique, à l'aide d'un système Waters Alliance 2695 muni du logiciel d'acquisition et de traitement des données Empower 2 (Waters). Le solvant utilisé est du tétrahydrofurane stabilisé avec 0,025% de hydroxytoluène butylé (Fisher), le débit est de 1 mL/min, la température des colonnes est de 35°C et le volume d'injection est de 50 µL. Les colonnes de séparation sont composées d'une colonne de garde de dimension 50 x 7,8 mm x 5 µm, une colonne 10³ A (300 x 7,8 mm ; 1K-75K Mw ; Phenomenex 00H-044-KO), deux colonnes 10⁴ A (300 x 7,8 mm ; 5K-500K Mw ; Phenomenex 00H-045-KO) et une colonne 10⁵ A (300 x 7,8 mm ; 10K-1000K Mw ; Phenomenex 00H-046-KO), les colonnes étant calibrées avec des étalons de polystyrène (PS). La détection est réalisée à l'aide d'un réfractomètre Waters 410 et d'un détecteur Waters 2996, à une température de 35°C.

Les viscosités indiquées sont mesurées au viscosimètre Brookfield, avec une aiguille 7 tournant à une vitesse adaptée à la sensibilité du capteur (en moyenne à 20 tr/min).

L'invention concerne un procédé de préparation d'une composition adhésive à base d'au moins un plastifiant et d'au moins un prépolymère silylé à l'aide d'une extrudeuse. Ce procédé permet une préparation en continu de la composition adhésive.

De préférence, la composition adhésive est une composition de Pressure Sensitive Adhesive (PSA).

Dans la présente demande, « *un prépolymère* » doit être compris comme signifiant « *un ou plusieurs prépolymères* » et « *un plastifiant* » ou « *une résine tackifiante* » doit être compris comme signifiant « *un ou plusieurs plastifiants* », respectivement « *une ou plusieurs résines tackifiantes* ». Il en est de même pour les autres composés de la composition adhésive.

Le procédé selon la présente invention comprend successivement :
- l'introduction d'un plastifiant dans l'extrudeuse ;
- le dégazage du plastifiant dans l'extrudeuse ;
- l'introduction d'un prépolymère silylé et le mélange de celui-ci avec le plastifiant dans l'extrudeuse ;
- la décharge du mélange de l'extrudeuse.

Par « *le procédé comprend successivement* », on entend que les étapes susmentionnées, distinctes les unes des autres, sont réalisées l'une après l'autre pour une portion donnée de plastifiant (étant entendu que, lorsque le procédé est mis en œuvre en continu, l'ensemble des étapes ci-dessus sont effectuées simultanément, du point de vue de l'appareillage, mais dans des portions distinctes de cet appareillage). Le prépolymère silylé est ainsi introduit à une position située en aval dans l'extrudeuse par rapport à la position de l'introduction du plastifiant et par rapport à la position du dégazage du plastifiant dans l'extrudeuse. Dans la présente demande, les termes « *aval* » et « *amont* » sont définis relativement au sens de circulation des produits dans l'extrudeuse

### Prépolymères silylés

Selon un mode de réalisation particulier, le prépolymère silylé comprend au moins un groupe alkoxysilane hydrolysable (de préférence terminal), et de préférence le prépolymère silylé comprend au moins deux groupes (de préférence terminaux) alkoxysilanes hydrolysables.

Selon un mode de réalisation particulier, le prépolymère silylé possède une chaîne principale choisie parmi une chaîne principale polyéther, une chaîne principale polyéther-polyuréthane, une chaîne principale polyester, une chaîne principale polyester-polyuréthane, une chaîne principale polyéther-polyester-polyuréthane, une chaîne principale polyoléfine, une chaîne principale polyoléfine-polyuréthane, une chaîne principale polyéther-polyoléfine-polyuréthane, une chaîne principale polyacrylate et une chaîne principale polyéther-polyacryate.

Selon un mode de réalisation particulier, les groupes alkoxysilanes hydrolysables sont de formule -Si(R⁴)ₚ(OR⁵)₃₋ₚ dans laquelle R⁴ et R⁵, identiques ou différents, représentent chacun un radical alkyle linéaire ou ramifié de 1 à 4 atomes de carbone, avec la possibilité lorsqu'il y a plusieurs radicaux R⁴ ou R⁵ que ceux-ci soient identiques ou différents.

Selon un premier mode de réalisation, le prépolymère silylé est de type polyéther ou polyéther-polyuréthane.

Avantageusement, le prépolymère silylé est un prépolymère ayant pour formule (I) : 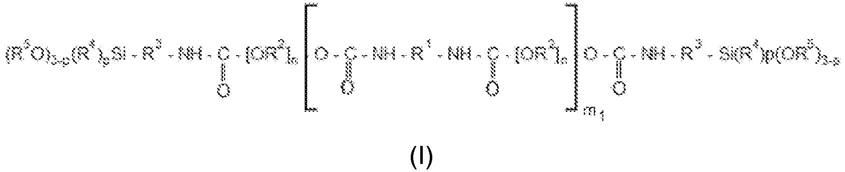 dans laquelle :
- R¹ représente un radical divalent hydrocarboné comprenant de 5 à 15 atomes de carbone qui peut être aromatique ou aliphatique, linéaire, ramifié ou cyclique ;
- R² représente un radical divalent alkylène linéaire ou ramifié comprenant de 1 à 4 atomes de carbone ;
- R³ représente un radical divalent alkylène linéaire comprenant de 1 à 3 atomes de carbone ;
- R⁴ et R⁵, identiques ou différents, représentent chacun un radical alkyle linéaire ou ramifié de 1 à 20 atomes de carbone, de préférence de 1 à 4, avec la possibilité lorsqu'il y a plusieurs radicaux R⁴ ou R⁵ que ceux-ci soient identiques ou différents ;
- n est un nombre entier tel que la masse molaire moyenne en nombre du bloc polyéther de formule -[OR²]ₙ- est comprise entre 300 Da et 30 kDa ;
- m₁ est un nombre entier nul (cas du prépolymère polyéther) ou non nul (cas du prépolymère polyéther-polyuréthane) ;
- n et m₁ sont tels que la masse molaire moyenne en nombre du polymère de formule (I) est comprise entre 600 Da et 60 kDa ;
- p est un nombre entier égal à 0, 1 ou 2.

Si m₁ est non nul, le prépolymère de formule (I) peut être obtenu selon le procédé suivant.

Dans une première étape, on synthétise un polyéther-polyuréthane polyol comprenant deux groupes terminaux hydroxyles et ayant pour formule (II) : 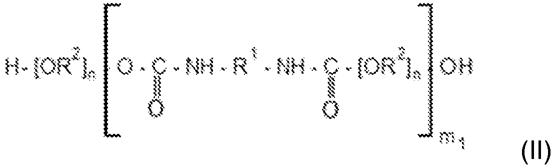 en faisant réagir une mole de diisocyanate de formule (III) : NCO-R¹-NCO avec un excès stoechiométrique d'un polyéther diol de formule (IV) : H-[OR²]ₙ-OH, ce qui correspond à un rapport des nombres de fonctions NCO/OH < 1 et préférentiellement égal à environ 0,5.

La réaction s'effectue à une température comprise entre 60 et 90 °C, durant un temps d'environ 2 à 8 heures, et éventuellement en présence d'un catalyseur.

Le polyéther-polyuréthane polyol de formule (II) est dans une seconde étape converti en prépolymère de formule (I) par une réaction de silylation avec un isocyanatosilane de formule (V) : NCO-R³-Si(R⁴)ₚ(OR⁵)₃₋ₚ à raison d'environ une mole de polyéther-polyuréthane polyol de formule (II) pour 2 moles du composé de formule (V).

Les polyéthers diols de formule (IV) sont largement disponibles dans le commerce, et les isocyanatosilanes de formule (V) le sont également. On peut citer à titre d'exemple le gamma-isocyanato-n-propyl-triméthoxysilane qui est disponible sous la dénomination GENIOSIL^{®} GF 40 ou encore l'alpha-isocyanato-n-méthyl-méthyldiméthoxysilane qui est disponible sous la dénomination commerciale GENIOSIL^{®} XL 42, tous deux auprès de la société Wacker.

Ces deux étapes de synthèses sont conduites dans des conditions anhydres, de manière à éviter l'hydrolyse des groupes alkoxysilanes. Un domaine de température typique pour la mise en œuvre de ces réactions est de 30 à 120°C, et plus particulièrement de 60 à 90°C. Une légère variation par rapport aux stoechiométries données précédemment peut être envisagée sans inconvénient, à condition toutefois de ne pas dépasser 10 % dans la première étape (synthèse du polyéther-polyuréthane polyol de formule (II)) et 2% dans la seconde étape (synthèse du prépolymère de formule (I)).

Il est fait référence au brevet européen EP 2235133 pour plus de détails concernant la préparation du prépolymère de formule (I) à groupes terminaux de type alkoxysilane lorsque m₁ est non nul.

La masse moléculaire moyenne en nombre (Mn) du prépolymère de formule (I) est comprise entre 600 Da et 60 kDa.

Selon une variante préférée, le prépolymère de formule (I) est tel que sa masse moléculaire moyenne en nombre (Mn) est comprise entre 4 et 50 kDa, et la masse molaire moyenne en nombre du bloc polyéther de formule -[OR²]ₙ- est comprise entre 2 et 25 kDa.

Selon une autre variante préférée, le prépolymère de formule (I) est tel que :
- R¹ est choisi parmi l'un des radicaux divalents suivants dont les formules ci-dessous font apparaître les 2 valences libres :
   - a) le radical divalent dérivé de l'isophorone diisocyanate (IPDI) : 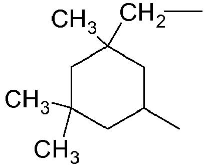
   - b) le radical divalent dérivé des 4,4'- et 2,4'-dicyclohexylméthane diisocyanate (HMDI) : 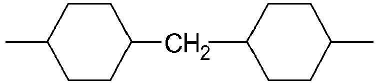 ou 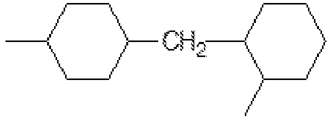
   - c) le radical dérivé des 2,4- et 2,6-toluène diisocyanate (TDI) : 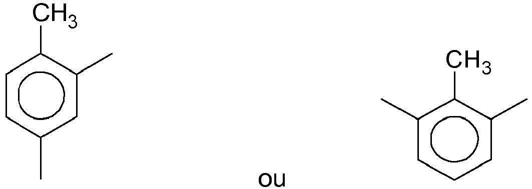
   - d) le radical dérivé des 4,4'- et 2,4'-diphénylméthane diisocyanate (MDI) : 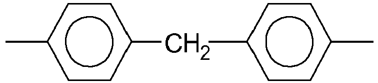 ou 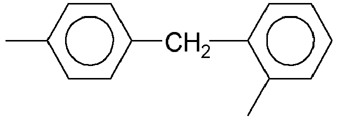
   - e) le radical dérivé du m-xylylène diisocyanate (m-XDI) : 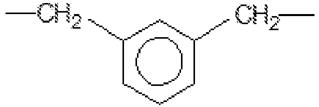
   - f) le radical dérivé de l'hexamethylène diisocyanate (HDI) : - (CH₂)₆-
- R² est le radical divalent éthylène et/ou isopropylène ;
- R³ est le radical divalent méthylène et/ou n-propylène ;
- R⁴ et R⁵ représentent chacun le radical méthyle ou éthyle.

Selon une variante plus particulièrement préférée, le prépolymère de formule (I) est tel que :
- R¹ est le radical divalent dérivé de l'isophorone diisocyanate (IPDI) de formule : 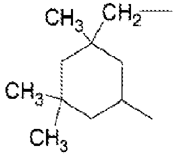
- R² est le radical divalent isopropylène ;
- R³ est le radical divalent n-propylène ;
- le groupe -Si(R⁴)ₚ(OR⁵)₃₋ₚ est le radical triméthoxysilyle.

Si m₁ est nul, le prépolymère de formule (I) peut être obtenu en faisant réagir un polyéther diol de formule (IV) : H-[OR²]ₙ-OH avec un isocyanatosilane de formule (V) : NCO-R³-Si(R⁴)ₚ(OR⁵)₃₋ₚ, à raison d'environ une mole de polyéther diol de formule (IV) pour 2 moles du composé de formule (VII).

Cette étape de synthèse est conduite dans des conditions anhydres, de manière à éviter l'hydrolyse des groupes alkoxysilanes. Un domaine de température typique pour la mise en œuvre de cette réaction est de 30 à 120°C, et plus particulièrement de 60 à 90°C. Une légère variation par rapport aux stoechiométries données précédemment peut être envisagée sans inconvénient, à condition toutefois de ne pas dépasser 2%.

Il est fait référence au brevet européen EP 2336208 pour plus de détails concernant la préparation du prépolymère de formule (I) à groupes terminaux de type alkoxysilane lorsque m₁ est nul.

Selon une variante également avantageuse, le prépolymère de formule (I) a un indice de polymolécularité compris entre 1,1 et 2,0. L'indice de polymolécularité est le rapport de la masse moléculaire moyenne en poids à la masse moléculaire moyenne en nombre. Un tel prépolymère peut être préparé à partir d'un polyéther diol de formule (IV) ayant lui-même un indice de polymolécularité compris entre 1 et 1,6. Un tel polyéther peut être obtenu, de façon connue, par polymérisation de l'oxyde d'alkylène correspondant en présence d'un catalyseur à base d'un double complexe métal-cyanure.

Un tel prépolymère peut être préparé préférentiellement à partir d'un poly(isopropoxy) diol (encore dénommé polypropylène glycol ou polyoxyisopropylène diol) dont l'indice de polymolécularité peut varier de 1 à 1,4. De tels polypropylène glycols sont disponibles commercialement. On peut citer à titre d'exemples les polypropylènes glycols ayant un indice de polymolécularité d'environ 1,1 qui sont disponibles sous la marque ACCLAIM^{®} auprès de la société Bayer, tels que l'ACCLAIM^{®} 8200 ayant pour masse molaire moyenne en nombre environ 8250 Da, l'ACCLAIM^{®} 12200 de masse molaire moyenne en nombre 11225 Da et l'ACCLAIM^{®} 18200 de masse molaire moyenne en nombre 18100 Da.

Des polyéthers silylés et polyéthers-polyuréthanes silylés de formule (I) sont également disponibles dans le commerce.

Selon un mode de réalisation particulier, le polyéther silylé le polyéther-polyuréthane de formule (I), avec m₁ nul ou non nul, a une viscosité mesurée à 23°C allant de 25 à 60 Pa.s.

Selon un mode de réalisation encore plus particulier, le polyéther silylé de formule (I), avec m₁ nul ou non nul, a une viscosité mesurée à 23°C allant de 30 à 37 Pa.s.

Selon un mode de réalisation de l'invention, la quantité massique de prépolymère silylé (I) (avec m₁ nul ou non nul) vaut de préférence de 20 à 85% par rapport à la masse de la composition adhésive. Encore plus préférentiellement, elle vaut de 30 à 75% et de manière encore plus avantageuse, elle vaut de 40% à 65%.

Selon un autre mode de réalisation, le prépolymère silylé est un polyéther-polyuréthane ayant pour formule (VI) : 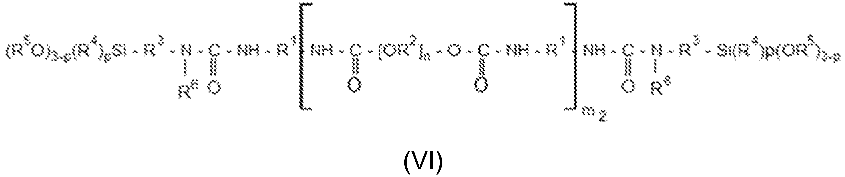 dans laquelle :
- R¹ représente un radical divalent hydrocarboné comprenant de 5 à 15 atomes de carbone qui peut être aromatique ou aliphatique, linéaire, ramifié ou cyclique ;
- R² représente un radical divalent alkylène linéaire ou ramifié comprenant de 1 à 4 atomes de carbone ;
- R³ représente un radical divalent alkylène linéaire comprenant de 1 à 3 atomes de carbone ;
- R⁴ et R⁵, identiques ou différents, représentent chacun un radical alkyle linéaire ou ramifié de 1 à 4 atomes de carbone, avec la possibilité lorsqu'il y a plusieurs radicaux R⁴ ou R⁵ que ceux-ci soient identiques ou différents ;
- R⁶ représente un atome d'hydrogène, un radical phényle, un radical 2-succinate ou un radical alkyle linéaire, ramifié ou cyclique comprenant de 1 à 6 atomes de carbone,
- n est un nombre entier tel que la masse molaire moyenne en nombre du bloc polyéther de formule -[OR²]ₙ- est comprise entre 300 Da et 30 kDa ;
- m₂ est un nombre entier non nul ;
- n et m2 sont tels que la masse molaire moyenne en nombre du polymère de formule (I) est comprise entre 600 Da et 60 kDa ;
- p est un nombre entier égal à 0, 1 ou 2.

Le prépolymère de formule (VI) peut être obtenu selon le procédé suivant.

Dans une première étape, on synthétise un polyéther-polyuréthane polyol comprenant deux groupes terminaux isocyanates et ayant pour formule (II') : 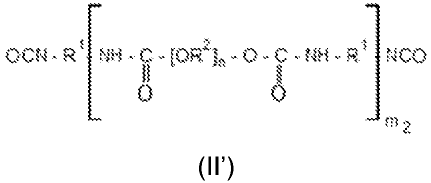 en faisant réagir une mole de polyéther diol de formule (IV) : H-[OR²]ₙ-OH (IV) avec un excès stœchiométrique d'un diisocyanate de formule (III) : NCO-R¹-NCO, ce qui correspond à un rapport des nombres de fonctions NCO/OH supérieur à 1. De préférence, la teneur en NCO du composé (II') va de 1,5 à 1,9%.

Le polyéther-polyuréthane polyol de formule (II') est dans une seconde étape converti en prépolymère de formule (I) par une réaction de silylation avec un aminosilane de formule (V') : R⁶-NH-R³-Si(R⁴)ₚ(OR⁵)₃₋ₚ à raison d'environ une mole de polyéther-polyuréthane diisocyanate de formule (II') pour 2 moles du composé de formule (V').

Les polyéthers diols de formule (IV) sont largement disponibles dans le commerce, et les aminosilanes de formule (V') le sont également. On peut citer à titre d'exemples le gamma-amino-n-propyl-triméthoxysilane et l'alpha-amino-n-méthyl-méthyldiméthoxysilane qui sont disponibles auprès de la société Wacker dans la gamme GENIOSIL^{®}.

Cette étape de synthèse est conduite dans des conditions anhydres, de manière à éviter l'hydrolyse des groupes alkoxysilanes. Un domaine de température typique pour la mise en œuvre de cette réaction est de 30 à 120°C, et plus particulièrement de 60 à 90°C. Une légère variation par rapport aux stoechiométries données précédemment peut être envisagée sans inconvénient, en ne dépassant pas de préférence 2 %.

Il est fait référence au brevet européen EP 2889348 pour plus de détails concernant la préparation du prépolymère de formule (VI) à groupes terminaux de type alkoxysilane.

Selon une variante également avantageuse, le prépolymère de formule (VI) a une masse molaire moyenne en nombre (Mn) comprise entre 600 Da et 60 kDa et un indice de polymolécularité compris entre 1,5 et 2,5. L'indice de polymolécularité est le rapport de la masse moléculaire moyenne en poids (Mw) à la masse moléculaire moyenne en nombre (Mn).

Un tel prépolymère peut être préparé à partir d'un polyéther diol de formule (IV) ayant lui-même un indice de polymolécularité compris entre 1 et 1,6. Un tel polyéther peut être obtenu, de façon connue, par polymérisation de l'oxyde d'alkylène correspondant en présence d'un catalyseur à base d'un double complexe métal-cyanure.

Un tel prépolymère peut être préparé à partir d'un poly(isopropoxy) diol (encore dénommé polypropylène glycol ou polyoxyisopropylène diol) dont l'indice de polymolécularité peut varier de 1 à 1,4. De tels polypropylène glycols sont disponibles commercialement. On peut citer à titre d'exemples les polypropylènes glycols ayant un indice de polymolécularité d'environ 1,1 qui sont disponibles sous la marque ACCLAIM^{®} auprès de la société Bayer, tels que l'ACCLAIM^{®} 8200 ayant pour masse molaire moyenne en nombre environ 8250 Da, l'ACCLAIM^{®} 12200 de masse molaire moyenne en nombre 11225 Da et l'ACCLAIM^{®} 18200 de masse molaire moyenne en nombre 18100 Da.

Des polyéthers-polyuréthane silylés de formule (VI) sont également disponibles dans le commerce.

Selon une variante avantageuse, le prépolymère de formule (VI) présente une ou plusieurs des caractéristiques suivantes :
- R⁴ et R⁵, identiques ou différents, représentent chacun un radical méthyle ou éthyle ;
- R³ représente un radical divalent alkylène linéaire comprenant de 1 à 3 atomes de carbone ;
- R² est choisi parmi les radicaux divalents : éthylène, isopropylène, n-propylène, n-butylène, éthyl-éthylène ;
- R⁶ représente un radical phényle, un radical 2- succinate ou un radical alkyle linéaire, ramifié ou cyclique comprenant de 1 à 6 atomes de carbone.

Selon une variante préférée, le prépolymère de formule (VI) est tel que :
- P = 0 ou 1;
- R⁴ et R⁵ représentent chacun le radical méthyle ; et
- R³ est un radical alkylène à 3 atomes de carbone ;
- R⁶ représente un radical phényle, un radical 2- succinate ou un radical alkyle linéaire, ramifié ou cyclique comprenant de 1 à 6 atomes de carbone.

Selon une autre variante préférée, le prépolymère de formule (VI) est tel que :
- R¹ est choisi parmi l'un des radicaux divalents suivants dont les formules ci-dessous font apparaître les 2 valences libres :
   - a) le radical divalent dérivé de l'isophorone diisocyanate (IPDI) : 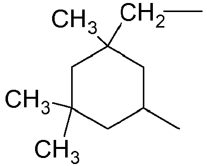
   - b) le radical divalent est dérivé des 4,4'- et 2,4'-dicyclohexylméthane diisocyanate (HMDI) : 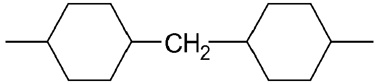 ou 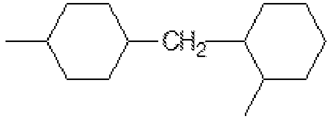
   - c) le radical dérivé des 2,4- et 2,6-toluène diisocyanate (TDI) : 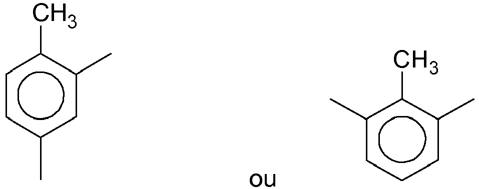
   - d) le radical dérivé des 4,4'- et 2,4'-diphénylméthane diisocyanate (MDI) : 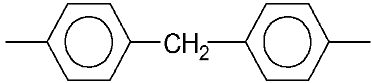 ou 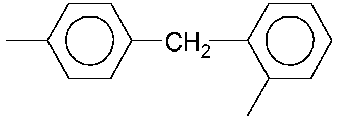
   - e) le radical dérivé du m-xylylène diisocyanate (m-XDI) 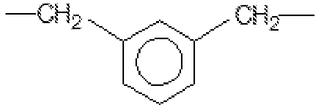
   - f) le radical dérivé de l'hexamethylène diisocyanate (HDI) : - (CH₂)₆-
- R² est le radical divalent éthylène et/ou isopropylène ;
- R³ est le radical divalent méthylène et/ou n-propylène ;
- R⁴ et R⁵ représentent chacun le radical méthyle ou éthyle ;
- R⁶ est un radical phényle, un radical 2- succinate ou un radical alkyle linéaire, ramifié ou cyclique comprenant de 1 à 6 atomes de carbone.

Selon une variante plus particulièrement préférée, le prépolymère de formule (VI) est tel que :
- R¹ est le radical divalent dérivé de l'isophorone diisocyanate (IPDI) de formule : 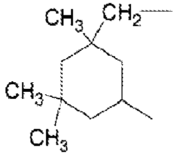
- R² est le radical divalent isopropylène ;
- R³ est le radical divalent n-propylène ;
- R⁶ est un radical phényle, un radical 2- succinate ou un radical alkyle linéaire, ramifié ou cyclique comprenant de 1 à 6 atomes de carbone ;
- le groupe -Si(R⁴)ₚ(OR⁵)₃₋ₚ est le radical triméthoxysilyle.

Selon un mode de réalisation particulier, le polyéther-polyuréthane de formule (VI) a une viscosité mesurée à 23°C allant de 25 à 100 Pa.s.

Selon un mode de réalisation encore plus particulier, le polyéther de formule (VI) a une viscosité mesurée à 23°C allant de 25 à 60 Pa.s.

Selon un mode de réalisation de l'invention, la quantité massique de prépolymère silylé vaut de préférence de 20 à 85% par rapport à la masse de la composition adhésive. Encore plus préférentiellement, elle vaut de 30 à 75% et de manière encore plus avantageuse, elle vaut de 40% à 65%.

### Plastifiant

De manière préférée, le plastifiant comprend une résine tackifiante. De manière particulièrement préféré, le plastifiant est une résine tackifiante. Dans l'ensemble de la description qui suit, on considère la variante préférée de la résine tackifiante. Toutefois, dans l'ensemble de cette description, il faut considérer que tout autre plastifiant peut être utilisé à la place de (ou en complément de) la résine tackifiante.

Ainsi, les autres plastifiants susceptibles d'être utilisés comprennent notamment :
- les plastifiants phtalates tels que le bis(2-éthylhexyl)phtalate, le diisodécyl phtalate, le diisononyl phtalate et le butyl benzyl phtalate, et plus particulièrement le diisodécyl phtalate (qui est en particulier commercialisé sous le nom PALATINOLTM DIDP par BASF) ;
- les esters de polyols, notamment le tétravalérate de pentaérythritol (qui est en particulier commercialisé sous le nom PEVALENTM par PERSTORP) ;
- les dialkylesters de l'acide cyclohexane-dicarboxylique, les radicaux alkyle des groupes esters contenant indépendamment chacun de 1 à 20 atomes de carbone, et notamment le diisononyl-1,2-cyclohexanedicarboxylate (qui est en particulier commercialisé sous le nom HEXAMOLL DINCH^{®} par BASF) ;
- les esters d'acide alkylsulfonique et de phénol (et notamment le produit commercialisé sous le nom MESAMOLL^{®} par LANXESS).

Selon un mode de réalisation, la résine tackifiante est compatible avec le prépolymère silylé. Par résine tackifiante compatible, on entend une résine tackifiante qui, lorsqu'elle est mélangée dans les proportions 50%/50% avec le prépolymère silylé, donne un mélange substantiellement homogène.

Selon un mode de réalisation particulier de l'invention, la résine tackifiante a une masse molaire moyenne en nombre comprise entre 200 Da et 10 kDa.

Sont particulièrement avantageuses au sens de la présente invention les résines tackifiantes choisie parmi :
- (i) les résines obtenues par polymérisation d'hydrocarbures terpéniques et de phénols, en présence de catalyseurs de Friedel-Crafts ;
- (ii) les résines obtenues par un procédé comprenant la polymérisation d'alpha-méthyl styrène ;
- (iii) les colophanes d'origine naturelle ou modifiées, et leurs dérivés hydrogénés, dimérisés, polymérisés ou estérifiés par des monoalcools ou des polyols ;
- (iv) les résines obtenues par hydrogénation, polymérisation ou copolymérisation de mélanges d'hydrocarbures aliphatiques insaturés ayant environ 5, 9 ou 10 atomes de carbone issus de coupes pétrolières ;
- (v) les résines terpéniques ;
- (vi) les copolymères à base de terpènes naturels ; et
- (vii) les résines acryliques ayant une viscosité à 100°C inférieure à 100 Pa.s.

De telles résines sont disponibles commercialement et parmi celles de type (i), (ii) et (iii) définis ci-dessus, on peut citer les produits suivants :
- résines de type (i) : Dertophène^{®} 1510 disponible auprès de la société DRT possédant une masse molaire d'environ 870 Da ; Dertophène^{®} H150 disponible auprès de la même société de masse molaire égale à environ 630 Da ; Sylvarez^{®} TP 95 disponible auprès de la société Arizona Chemical ayant une masse molaire d'environ 1200 Da ;
- résines de type (ii) : Norsolène^{®} W100 disponible auprès de la société Cray Valley, qui est obtenue par polymérisation d'alpha-méthyl styrène sans action de phénols, avec une masse molaire en nombre de 900 Da ; Sylvarez^{®} 510 qui est également disponible auprès de la société Arizona Chemical avec une masse molaire d'environ 1740 Da, dont le procédé d'obtention comprend également l'ajout de phénols.
- résines de type (iii) : Sylvalite^{®} RE 100 qui est un ester de collophane et de pentaeréthritol disponible auprès de la société Arizona Chemical et de masse molaire environ 1700 Da.

De manière encore plus préférée, la résine tackifiante est choisie parmi les résines de types (i) ou les résines de type (ii).

Selon une autre variante préférée, on utilise comme résine tackifiante une résine de type (iii) et de préférence un ester de collophane.

La quantité massique de résine tackifiante vaut de préférence de 15 à 80% par rapport à la masse de la composition adhésive. Encore plus préférentiellement, elle vaut de 25 à 70% et de manière encore plus avantageuse, elle vaut de 35% à 60%.

Selon un mode de réalisation particulier, la résine avant dégazage contient une quantité d'eau supérieure ou égale à 500 ppm, de préférence supérieure ou égale à 1000 ppm, encore plus préférentiellement supérieure ou égale à 2000 ppm, voire à 4000 ppm. La teneur en eau de la résine peut être mesurée par un dosage Karl Fisher selon la norme ISO 760.

### Catalyseur de réticulation

La composition adhésive préparée par le procédé selon l'invention peut comprendre un catalyseur de réticulation ou ne pas en comprendre. Dans ce dernier cas, un catalyseur de réticulation peut toutefois être ajouté ultérieurement à la composition adhésive, par exemple lors de la mise en œuvre et de l'application de celle-ci.

Lorsque la composition adhésive comprend un catalyseur, le procédé selon l'invention comprend l'introduction du catalyseur. De préférence l'introduction du catalyseur a lieu dans l'extrudeuse. Alternativement, l'introduction du catalyseur peut avoir lieu hors de l'extrudeuse. Par exemple, le catalyseur est ajouté à la composition adhésive après que cette dernière ait été déchargée de l'extrudeuse, par exemple au moyen d'un mélangeur dynamique.

Lorsque l'introduction du catalyseur a lieu dans l'extrudeuse, celle-ci peut avoir lieu en tout point de l'extrudeuse. Dans un mode de réalisation avantageux, l'introduction du catalyseur de réticulation est réalisée dans l'extrudeuse, entre l'introduction du prépolymère silylé et la décharge de l'extrudeuse. Alternativement, l'introduction du catalyseur peut avoir lieu entre l'introduction de la résine tackifiante dans l'extrudeuse et le dégazage de la résine tackifiante ou en même temps que l'introduction de la résine tackifiante.

Selon un mode de réalisation, le catalyseur est introduit seul. Selon un autre mode de réalisation, le catalyseur est introduit mélangé à un support, tel que du polypropylène glycol par exemple. Selon un autre mode de réalisation, le catalyseur est introduit mélangé à un ou plusieurs autres composants de la composition, telle que la résine tackifiante ou le prépolymère silylé.

Lorsqu'il est présent dans la composition adhésive, le catalyseur de réticulation peut être tout catalyseur connu par l'homme du métier pour la condensation des silanols. De tels catalyseurs sont par exemple des dérivés organiques de l'étain comme le dilaurate de dibutyle étain (ou DBTL) ou le dinéodécanoate de dioctylétain (disponible commercialement sous la dénomination TIBKAT^{®} 223). On peut également citer comme exemples de tels catalyseurs des dérivés organiques du titane comme l'acétyl acétonate de titane (disponible commercialement sous la dénomination TYZOR^{®} AA75 auprès de la société DuPont), de l'aluminium comme le chélate d'aluminium (disponible commercialement sous la dénomination K-KAT^{®} 5218 auprès de la société King Industries), des amines comme le 1,8-diazobicyclo (5.4.0) undécène-7 ou DBU.

Selon un mode de réalisation particulier, la quantité massique de catalyseur de réticulation vaut de 0,01% à 8% par rapport à la masse de la composition adhésive. De préférence, la quantité massique de catalyseur vaut de 0,1% à 2%.

### Autres additifs

A titre optionnel, le procédé selon l'invention peut également comprendre l'introduction de polymères thermoplastiques souvent utilisés dans la préparation des HMPSA, tels que l'éthylène vinyl acétate (EVA) ou des copolymères blocs styréniques. Ces polymères thermoplastiques peuvent être introduits en combinaison avec le prépolymère silylé ou bien être introduits dans l'extrudeuse indépendamment de l'introduction du prépolymère silylé.

Le procédé selon l'invention peut avantageusement comprendre l'introduction d'un ou plusieurs antioxydants (ou stabilisants). Avantageusement la quantité massique de l'antioxydant vaut de 0,1 à 2%. Ces composés sont introduits pour protéger la composition adhésive d'une dégradation résultant d'une réaction avec de l'oxygène qui est susceptible de se former par action de la chaleur ou de la lumière. Ces composés peuvent inclure des antioxydants primaires qui piègent les radicaux libres et sont notamment des phénols substitués comme l'Irganox^{®} 1076 de CIBA. Les antioxydants primaires peuvent être utilisés seuls ou en combinaison avec d'autres antioxydants secondaires ou des stabilisants UV. Dans une variante préférée de l'invention, l'antioxydant est introduit dans l'extrudeuse au même moment que la résine tackifiante.

Le procédé selon l'invention peut en outre comprendre l'introduction d'un ou plusieurs piégeurs d'humidité, de préférence un dérivé alkoxysilane hydrolysable, et encore plus préférentiellement un dérivé de triméthoxysilane. Avantageusement, la quantité massique du piégeur d'humidité est inférieure ou égale à 3%. Un tel piégeur d'humidité prolonge avantageusement la durée de conservation de la composition adhésive durant le stockage et le transport, avant son utilisation. On peut citer par exemple le gamma-métacryloxypropyltriméthoxysilane disponible sous la dénomination commerciale SILQUEST^{®} A-174 auprès de la société US Momentive Performance Materials Inc.

Le procédé selon l'invention peut aussi comprendre l'introduction d'un plastifiant tel qu'un phtalate ou un benzoate, une huile paraffinique et naphténique (comme le Primol^{®} 352 de la société ESSO) ou encore une cire d'un homopolymère de polyéthylène (comme l'A-C^{®} 617 de Honeywell), ou une cire d'un copolymère de polyéthylène et d'acétate de vinyle, ou encore des pigments, des colorants ou des charges.

Les additifs ci-dessus peuvent être introduits dans l'extrudeuse à différents endroits ou à un même endroit. Ils peuvent être introduits au même endroit que le plastifiant, au même endroit que le prépolymère silylé ou à un ou des endroits différents des positions d'introduction du plastifiant et du prépolymère silylé.

### Procédé d'extrusion

Le procédé selon l'invention est mis en œuvre à l'aide d'une extrudeuse comprenant au moins deux vis rotatives.

Selon un mode de réalisation avantageux, l'extrudeuse est une extrudeuse bi-vis.

Selon un mode de réalisation préféré, l'extrudeuse est une extrudeuse bi-vis co-rotatives interpénétrées. Dans ce mode de réalisation, les deux vis de l'extrudeuse tournent dans le même sens et se touchent l'une à l'autre. Alternativement, l'extrudeuse peut être une extrudeuse bi-vis contra-rotatives, les deux vis de l'extrudeuse tournant dans un sens opposé l'une par rapport à l'autre.

L'extrudeuse utilisée dans le procédé selon l'invention peut également être une extrudeuse tri-vis ou tout autre extrudeuse multi-vis.

Selon un mode de réalisation préféré, l'extrudeuse présente une géométrie définie par le rapport du diamètre externe des vis sur le diamètre interne des vis (De/Di) valant de 1,3 à 1,8, de préférence de 1,55 à 1,8.

Selon un mode de réalisation particulièrement avantageux, l'extrudeuse présente une longueur définie par un multiple du diamètre des vis (D) valant de 28D à 100D, de préférence de 40D à 80D.

La vitesse de rotation des vis peut valoir de 150 tours par minute à 1200 tours par minute, de préférence de 300 tours par minute à 600 tours par minute.

Le procédé selon l'invention comprend successivement :
- l'introduction d'une résine tackifiante dans l'extrudeuse ;
- le dégazage de la résine tackifiante dans l'extrudeuse ;
- l'introduction d'un prépolymère silylé et le mélange de celui-ci avec la résine tackifiante dans l'extrudeuse ;
- la décharge du mélange de l'extrudeuse.

L'introduction des composés dans l'extrudeuse peut être réalisée à l'aide de trémies disposées aux emplacements souhaités le long de l'extrudeuse. Ces trémies peuvent être munies de doseurs permettant de contrôler la quantité de composés introduits dans l'extrudeuse.

Selon un mode de réalisation du procédé selon l'invention, le temps de séjour dans l'extrudeuse de la résine tackifiante est de 0,1 à 3 minutes. Un tel temps de séjour est particulièrement avantageux puisque les composés de la composition adhésive, et en particulier la résine tackifiante et le prépolymère silylé, sont maintenus très peu de temps à des températures élevées lors de leur mise en œuvre, ce qui permet de réduire le risque de dégradation de ces composés. De manière plus avantageuse ce temps de séjour est de 0,5 à 2,5 min, encore plus avantageusement de 1 à 2 min.

Par dégazage, on entend l'opération consistant à diminuer la quantité de n'importe quel gaz présent dans un composé ou un mélange de composés, par exemple dans la résine tackifiante. En particulier le dégazage permet l'élimination de tout ou partie de l'eau contenue dans la résine tackifiante. Il peut également permettre d'éliminer tout ou partie des COV contenus dans la résine, en particulier les COV formés lors de la dégradation de la résine tackifiante au cours de sa mise en œuvre.

Le dégazage peut être réalisé par l'application d'un vide (ou dépressurisation). Ce vide est obtenu par l'application d'une dépression inférieure ou égale à 760 mmHg par rapport à la pression atmosphérique, par exemple comprise entre 350 et 760 mmHg, de préférence comprise entre 400 et 700 mmHg, et de préférence encore entre 600 et 700 mmHg.

Selon un mode de réalisation, la résine tackifiante après avoir subi le dégazage contient une quantité d'eau inférieure ou égale à 500 ppm, de préférence inférieure ou égale à 300 ppm, de préférence inférieure ou égale à 200 ppm, encore plus préférentiellement inférieure ou égale à 100 ppm. La teneur en eau de la résine peut être mesurée par un dosage Karl Fisher selon la norme ISO 760.

Avantageusement, la température de l'extrudeuse pendant le dégazage est de 5°C à 100°C au-dessus de la température de ramollissement de la résine tackifiante. La température de ramollissement bille-anneau de la résine tackifiante est mesurée selon la norme ISO 4625. L'application d'une telle température permet de maintenir la résine à une température suffisamment élevée de manière à ce qu'elle soit suffisamment fluide pour permettre un dégazage efficace.

Le procédé selon l'invention peut comprendre un ou plusieurs dégazages additionnels en plus du dégazage de la résine tackifiante. De manière particulièrement avantageuse, le procédé comprend au moins un dégazage additionnel après le mélange du prépolymère silylé avec la résine tackifiante. La présence d'au moins un dégazage additionnel après le mélange du prépolymère silylé avec la résine tackifiante peut permettre d'obtenir une composition adhésive finale avec une faible teneur en bulles. Ces dégazages peuvent être réalisés par l'application d'une dépression, en particulier une dépression inférieure ou égale à 760 mmHg par rapport à la pression atmosphérique, par exemple comprise entre 350 mmHg et 760 mmHg, de préférence comprise entre 400 mmHg et 700 mmHg.

Selon un mode de réalisation, la température de l'extrudeuse varie de l'amont vers l'aval, c'est-à-dire depuis le point d'introduction de la résine tackifiante jusqu'au point de décharge, le long de l'extrudeuse.

Selon un mode de réalisation avantageux, la température de l'extrudeuse, de l'amont vers l'aval, augmente de la température ambiante jusqu'à une température maximale Tmax lors du dégazage de la résine tackifiante puis diminue jusqu'à une température finale Tf lors de la décharge du mélange. La variation de température depuis la température ambiante jusqu'à Tmax, et depuis Tmax jusqu'à Tf, peut être monotone. Alternativement, des diminutions locales de température, respectivement des augmentations locales de température peuvent être observées.

Selon un mode de réalisation plus particulier, Tmax est comprise entre 150°C et 220°C, de préférence entre 160°C et 180°C, de préférence encore entre 165°C et 175°C. Selon un mode de réalisation préféré, Tmax est d'environ 170°C. L'application d'une telle température permet en général l'obtention d'une bonne fluidité lors de son dégazage, ce qui en améliore l'efficacité, tout en évitant une température excessive susceptible de dégrader la résine.

Selon un mode de réalisation, Tf est comprise entre la température ambiante et Tmax. Selon un mode de réalisation plus particulier, Tf est comprise entre 80°C et 145°C et de préférence entre 120°C et 140°C. Selon un mode de réalisation préféré, Tf est d'environ 130°C.

Selon un mode de réalisation, la température de l'extrudeuse lors du mélange du prépolymère silylé avec la résine tackifiante Tm est comprise entre Tf et Tmax. Selon un mode de réalisation plus particulier, Tm est comprise entre 130°C et 170°C, de préférence entre 140°C et 160°C, de préférence encore entre 145°C et 155°C. Selon un mode de réalisation préféré, Tm est d'environ 150°C.

Selon un mode de réalisation avantageux, la température de l'extrudeuse, de l'amont vers l'aval :
- augmente de la température ambiante jusqu'à une température T1 comprise entre 100°C et 180°C, de préférence entre 120°C et 130°C, de préférence encore d'environ 125°C,
- augmente ensuite jusqu'à une température Tmax lors du dégazage de la résine tackifiante comprise entre 150°C et 220°C, de préférence entre 160°C et 180°C, de préférence encore entre 165°C et 175°C, encore plus préférentiellement d'environ 170°C,
- diminue jusqu'à une température T2 comprise entre 130°C et 155°C, de préférence entre 140°C et 150°C, de préférence encore d'environ 145°C,
- augmente jusqu'à une température Tm lors du mélange du prépolymère silylé avec la résine tackifiante comprise entre 130°C et 170°C, de préférence entre 140°C et 160°C, de préférence encore entre 145°C et 155°C, encore plus préférentiellement d'environ 150°C,
- diminue jusqu'à une température Tf lors de la décharge du mélange comprise entre 20 °C et 145°C, de préférence entre 120°C et 140°C, de préférence encore d'environ 130°C.

Différents éléments de vis peuvent être assemblés sur l'arbre de l'extrudeuse afin de lui conférer un profil particulier. Par exemple, des éléments spécifiques connus de l'homme du métier peuvent être ajoutés afin de créer des bouchons dynamiques ou des zones de mélange, éventuellement avec l'aide de l'application d'une température adaptée. L'extrudeuse peut également comprendre des éléments de vis de convoyage permettant l'acheminement des composés en direction du point de décharge.

Selon un mode de réalisation, l'extrudeuse comprend une alternance d'un ou plusieurs éléments de convoyage et d'un ou plusieurs éléments spécifiques permettant la création de bouchons dynamiques ou de zones de mélange. La création de deux bouchons dynamiques encadrant une zone de convoyage permet de créer une zone sensiblement étanche entre lesdits deux bouchons. Cette zone sensiblement étanche facilite l'application d'un vide pour le dégazage.

Selon un mode de réalisation particulier, l'extrudeuse comprend, depuis le point d'introduction de la résine tackifiante jusqu'au point de décharge, une zone de convoyage, une zone de fusion (qui de préférence est à la température T1 mentionnée ci-dessus), une zone de convoyage (qui de préférence est à la température Tmax mentionnée ci-dessus) dans laquelle a lieu le dégazage de la résine tackifiante, un bouchon dynamique (qui de préférence est à la température T2 mentionnée ci-dessus), une zone de convoyage dans laquelle est introduit le prépolymère silylé, une zone de mélange avec bouchon dynamique (qui de préférence est à la température Tm mentionnée ci-dessus) où le prépolymère est mélangé avec la résine tackifiante, une zone de convoyage (optionnellement à la température Tf mentionnée ci-dessus) dans laquelle optionnellement un autre dégazage a lieu, et un bouchon final (optionnellement également à la température Tf mentionnée ci-dessus), qui peut être généré par la simple présence d'une filière en bout d'extrudeuse.

Selon un mode de réalisation, la décharge du mélange de l'extrudeuse est effectuée à travers une buse. Selon un mode de réalisation, la buse permet l'enduction d'un substrat avec la composition adhésive. L'enduction peut avoir lieu sous toutes formes possibles, telles que sous forme de film, de spray, de cordon ou d'amas. Le substrat sur lequel la composition est enduite peut être un substrat antiadhérent. Il peut s'agir d'un substrat transportant la composition adhésive, par exemple pour qu'elle soit ultérieurement réticulée.

### EXEMPLES

### Exemple 1 : Analyse de la teneur en COV dans la résine tackifiante

Les essais d'extrusions ont été réalisés sur une extrudeuse bi-vis co-rotatives interpénétrées ZSK26MC de Coperion. Le diamètre des vis est de 26 mm, la géométrie De/Di est de 1,55 et la longueur de l'extrudeuse est de 40D. L'extrudeuse est composée de 10 fourreaux successifs de 4D chacun et notés F1 à F10. La vitesse de rotation des vis est de 300 tours par minute et le débit global est de 15 kg/h. La température de l'extrudeuse bi-vis est régulée de manière à maintenir T1 à 125°C, Tmax à 170°C, T2 à 145°C, Tm à 150°C et Tf à 130°C.

La résine tackifiante (résine Dertophène H150) est introduite au début de l'extrudeuse bi-vis avec un antioxydant (Irganox 245), introduit à une quantité massique de 1% par rapport à la résine tackifiante.

La résine est ensuite dégazée dans l'extrudeuse en appliquant une dépression de 700 mmHg au fourreau F4. La teneur en COV de la résine après sa décharge de l'extrudeuse est mesurée.

La teneur en COV est également mesurée sur une résine Dertophène H150 brute, cette dernière servant de contrôle.

Les COV mesurés sont les suivants :

| | |
|---|---|
| A | toluène |
| B | camphène |
| C | phénol |
| D | trans-3-caren-2-ol |
| E | 3-méthylènecyclopentanecarboxylate de 1,7,7-triméthylbicyclo[2.2.1]hept-2-yle |
| F | dichlorure de (1,7,7-triméthylbicyclo[2.2.1]hept-2-yl)phosphoneux |
| G | 2-butanone |
| H | tricyclène |
| 1 | acétate d'éthyle |

La teneur en COV est mesurée par chromatographie en phase gazeuse couplée à la spectrométrie de masse (GC-MS) à 120°C, pendant 30 min.

Les résultats sont présentés sur la **figure 1**. On constate qu'en dégazant sous pression réduite la résine tackifiante à l'état fondu, la quantité initiale de COV est significativement réduite en nombre et en masse. Après dégazage, il reste majoritairement 5 composés volatiles identifiables contre 9 initialement. Leur teneur finale est également réduite.

### Exemple 2 : Analyse de la teneur en eau dans la résine tackifiante

De la résine tackifiante Dertophène H150 est introduite seule dans une extrudeuse bi-vis telle que décrite dans l'exemple 1. La dépression appliquée pour le dégazage de la résine est de 700 mmHg. Des mesures d'eau résiduelle sont ensuite effectuées sur la résine après la décharge de cette dernière de l'extrudeuse.

Des mesures d'eau résiduelle sont également réalisées sur la résine Dertophène H150 brute (contrôle) et sur une résine Dertophène H150 dégazée selon un procédé batch ou discontinu (dégazage à 160°C en cuve pendant 1 heure) (essai comparatif).

Les résultats sont présentés ci-dessous.

| | Résine brute | Résine dégazée par un procédé batch | Résine dégazée au moyen d'une extrudeuse bi-vis |
|---|---|---|---|
| Teneur en eau résiduelle (ppm) | 4575 | 525 | 275 |

Le procédé en continu à l'aide d'une extrudeuse bi-vis permet d'éliminer plus efficacement l'eau résiduelle contenue dans la résine que le procédé batch et dans des conditions moins sévères (température plus basse mesurée à 131°C en sortie d'extrudeuse et temps de séjour plus court).

### Exemple 3 : Analyse de la teneur en COV dans la composition adhésive

Une composition PSA est préparée selon le protocole décrit dans l'exemple 1, excepté qu'un prépolymère silylé est introduit dans l'extrudeuse au fourreau F6, après le dégazage de la résine. La résine et le prépolymère sont mélangés dans l'extrudeuse et la composition PSA ainsi obtenue est analysée après décharge de l'extrudeuse : des mesures de COV sont réalisées sur la composition par GC-MS à 120°C, pendant 30 min.

Des mesures de la quantité de COV sont également effectuées sur une composition PSA industrielle identique préparée par un procédé batch (essai comparatif).

Les résultats sont présentés sur la **figure 2**. La quantité de COV présente dans la composition obtenue à l'aide du procédé selon l'invention est très inférieure à celle présente dans une composition préparée par un procédé batch.

### Exemple 4: Analyse par chromatographie d'exclusion stérique de la composition adhésive

La composition adhésive préparée par le procédé selon l'invention et la composition industrielle préparée selon un procédé batch décrites dans l'exemple 3 sont analysées par chromatographie d'exclusion stérique.

On constate que les deux courbes sont presque superposées ce qui montre que les 2 compositions sont très proches. Le procédé de préparation par extrudeuse n'a donc pas d'impact sur la composition adhésive : elle a une qualité semblable à celle de la composition industrielle.

## Revendications

1. Procédé de préparation d'une composition adhésive, à l'aide d'une extrudeuse comprenant au moins deux vis rotatives, comprenant successivement :
- l'introduction d'au moins un plastifiant dans l'extrudeuse ;
- le dégazage du plastifiant dans l'extrudeuse ;
- l'introduction d'au moins un prépolymère silylé, le prépolymère silylé étant introduit à une position située en aval dans l'extrudeuse par rapport à la position de l'introduction du plastifiant et par rapport à la position du dégazage du plastifiant dans l'extrudeuse, et le mélange de celui-ci avec le plastifiant dans l'extrudeuse ; et
- la décharge du mélange de l'extrudeuse.

2. Procédé selon la revendication 1, dans lequel l'extrudeuse est une extrudeuse bi-vis co-rotatives interpénétrées.

3. Procédé selon la revendication 1 ou 2, dans lequel l'extrudeuse présente une géométrie définie par le rapport du diamètre externe des vis sur le diamètre interne des vis De/Di valant de 1,3 à 1,8, de préférence de 1,55 à 1,8; et/ou dans lequel l'extrudeuse présente une longueur définie par un multiple du diamètre D des vis valant de 28D à 100D, de préférence de 40D à 80D.

4. Procédé selon l'une des revendications 1 à 3, dans lequel le prépolymère silylé possède une chaîne principale choisie parmi une chaîne principale polyéther, une chaîne principale polyéther-polyuréthane, une chaîne principale polyester, une chaîne principale polyester-polyuréthane, une chaîne principale polyéther-polyester-polyuréthane, une chaîne principale polyoléfine, une chaîne principale polyoléfine-polyuréthane, une chaîne principale polyéther-polyoléfine-polyuréthane, une chaîne principale polyacrylate et une chaîne principale polyéther-polyacrylate, et comprend deux groupes terminaux alkoxysilanes hydrolysables ; et de préférence le prépolymère silylé est un prépolymère de type polyéther ou polyéther-polyuréthane comprenant deux groupes terminaux alkoxysilanes hydrolysables.

5. Procédé selon l'une des revendications 1 à 4, dans lequel le prépolymère silylé est un prépolymère ayant pour formule (I): 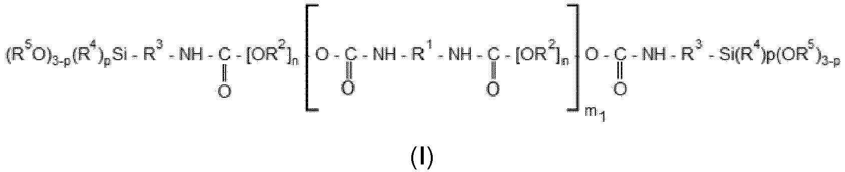 dans laquelle :
- R¹ représente un radical divalent hydrocarboné comprenant de 5 à 15 atomes de carbone qui peut être aromatique ou aliphatique, linéaire, ramifié ou cyclique ;
- R² représente un radical divalent alkylène linéaire ou ramifié comprenant de 1 à 4 atomes de carbone ;
- R³ représente un radical divalent alkylène linéaire comprenant de 1 à 3 atomes de carbone ;
- R⁴ et R⁵, identiques ou différents, représentent chacun un radical alkyle linéaire ou ramifié de 1 à 20 atomes de carbone, de préférence de 1 à 4, avec la possibilité lorsqu'il y a plusieurs radicaux R⁴ ou R⁵ que ceux-ci soient identiques ou différents ;
- n est un nombre entier tel que la masse molaire moyenne en nombre du bloc polyéther de formule -[OR²]ₙ- est comprise entre 300 Da et 30 kDa ;
- m₁ est un nombre entier nul ou non nul ;
- n et m1 sont tels que la masse molaire moyenne en nombre du polymère de formule (I) est comprise entre 600 Da et 60 kDa;
- p est un nombre entier égal à 0, 1 ou 2 ;
et ayant de préférence une viscosité mesurée à 23°C allant de 25 à 100 Pa.s ;
ou dans lequel le prépolymère silylé est un polyéther ayant pour formule (VI) : 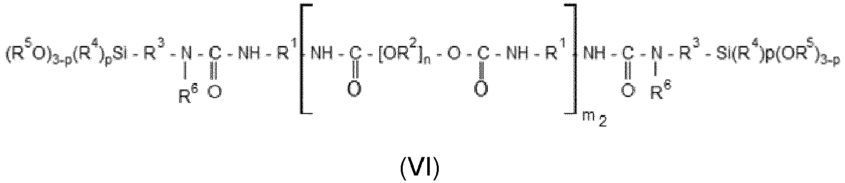 dans laquelle :
- R¹ représente un radical divalent hydrocarboné comprenant de 5 à 15 atomes de carbone qui peut être aromatique ou aliphatique, linéaire, ramifié ou cyclique ;
- R² représente un radical divalent alkylène linéaire ou ramifié comprenant de 1 à 4 atomes de carbone ;
- R³ représente un radical divalent alkylène linéaire comprenant de 1 à 3 atomes de carbone ;
- R⁴ et R⁵, identiques ou différents, représentent chacun un radical alkyle linéaire ou ramifié de 1 à 4 atomes de carbone, avec la possibilité lorsqu'il y a plusieurs radicaux R⁴ ou R⁵ que ceux-ci soient identiques ou différents ;
- R⁶ représente un atome d'hydrogène, un radical phényle, un radical 2-succinate ou un radical alkyle linéaire, ramifié ou cyclique comprenant de 1 à 6 atomes de carbone ;
- n est un nombre entier tel que la masse molaire moyenne en nombre du bloc polyéther de formule -[OR²]ₙ- est comprise entre 300 Da et 30 kDa ;
- m₂ est un nombre entier non nul ;
- n et m₂ sont tels que la masse molaire moyenne en nombre du polymère de formule (VI) est comprise entre 600 Da et 60 kDa ;
- p est un nombre entier égal à 0, 1 ou 2 ;
et ayant de préférence une viscosité mesurée à 23°C allant de 25 à 100 Pa.s.

6. Procédé selon l'une des revendications 1 à 5, dans lequel le plastifiant est ou comprend une résine tackifiante, de préférence la résine tackifiante a une masse molaire moyenne en nombre comprise entre 200 Da et 10 kDa et, plus préférentiellement, elle est choisie parmi :
- (i) les résines obtenues par polymérisation d'hydrocarbures terpéniques et de phénols, en présence de catalyseurs de Friedel-Crafts ;
- (ii) les résines obtenues par un procédé comprenant la polymérisation d'alpha-méthyl styrène ;
- (iii) les colophanes d'origine naturelle ou modifiées, et leurs dérivés hydrogénés, dimérisés, polymérisés ou estérifiés par des monoalcools ou des polyols ;
- (iv) les résines obtenues par hydrogénation, polymérisation ou copolymérisation de mélanges d'hydrocarbures aliphatiques insaturés ayant environ 5, 9 ou 10 atomes de carbone issus de coupes pétrolières ;
- (v) les résines terpéniques ;
- (vi) les copolymères à base de terpènes naturels ; et
- (vii) les résines acryliques ayant une viscosité à 100°C inférieure à 100 Pa.s.

7. Procédé selon l'une des revendications 1 à 6, dans lequel la quantité massique de prépolymère silylé vaut de 20 à 85%, de préférence 30 à 75%, et la quantité massique de plastifiant vaut de 15% à 80%, de préférence de 25% à 70%, par rapport à la masse de la composition adhésive.

8. Procédé selon l'une des revendications 1 à 7, dans lequel la composition adhésive est dépourvue de catalyseur de réticulation.

9. Procédé selon l'une des revendications 1 à 7, dans lequel la composition adhésive comprend un catalyseur de réticulation, le procédé comprenant l'introduction du catalyseur et son mélange avec le plastifiant et le prépolymère silylé, cette introduction étant de préférence effectuée dans l'extrudeuse, encore plus préférentiellement entre l'introduction du prépolymère silylé et la décharge, la quantité massique de catalyseur de réticulation valant de préférence de 0,01% à 8%, plus préférentiellement de 0,1% à 2%, par rapport à la masse de la composition adhésive.

10. Procédé selon l'une des revendications 1 à 9, dans lequel le temps de séjour dans l'extrudeuse du plastifiant est de 0,1 à 3 minutes, de préférence de 0,5 à 2,5 min, encore plus préférentiellement de 1 à 2 min.

11. Procédé selon l'une des revendications 1 à 10, dans lequel le plastifiant, après avoir subi le dégazage, contient une quantité massique d'eau inférieure ou égale à 500 ppm, de préférence inférieure ou égale à 300 ppm, de préférence inférieure ou égal à 200 ppm, encore plus préférentiellement inférieure ou égale à 100 ppm ; et/ou le plastifiant, avant le dégazage, contient une quantité massique d'eau supérieure ou égale à 500 ppm, de préférence supérieure ou égale à 1000 ppm, encore plus préférentiellement supérieure ou égale à 2000 ppm.

12. Procédé selon l'une des revendications 1 à 11, comprenant en outre une ou plusieurs étapes d'introduction dans l'extrudeuse d'un ou plusieurs composés choisis parmi les antioxydants, les piégeurs d'humidité, les polymères thermoplastiques, les plastifiants, les huiles paraffiniques et naphténiques, les cires d'un homopolymère de polyéthylène, les cires d'un copolymère de polyéthylène et d'acétate de vinyle, les pigments, les colorants et les charges.

13. Procédé selon l'une des revendications 1 à 12, dans lequel la température de l'extrudeuse lors du dégazage du plastifiant est de 5°C à 100°C au-dessus de la température de ramollissement bille-anneau du plastifiant mesurée selon la norme ISO 4625.

14. Procédé selon l'une des revendications 1 à 13, comprenant en outre un ou plusieurs dégazages additionnels, et comprenant de préférence au moins un dégazage additionnel après le mélange du prépolymère silylé avec le plastifiant.

15. Procédé selon l'une des revendications 1 à 14, dans lequel la température de l'extrudeuse, depuis le point d'introduction du plastifiant jusqu'au point de décharge, augmente depuis la température ambiante jusqu'à une température maximale Tmax lors du dégazage du plastifiant, Tmax étant de préférence comprise entre 150°C et 220°C, de préférence encore entre 160°C et 180°C, plus préférentiellement entre 165°C et 175°C, et Tmax étant encore plus préférentiellement d'environ 170°C ; puis diminue jusqu'à une température finale Tf lors de la décharge comprise entre la température ambiante et Tmax, Tf étant de préférence comprise entre 80°C et 145°C, de préférence encore entre 120°C et 140°C, et Tf étant encore plus préférentiellement d'environ 130°C ; et dans lequel de préférence la température de l'extrudeuse lors du mélange du prépolymère avec le plastifiant Tm est comprise entre Tf et Tmax, Tm étant de préférence comprise entre 130°C et 170°C, de préférence encore entre 140°C et 160°C, plus préférentiellement entre 145°C et 155°C, Tm étant encore plus préférentiellement d'environ 150°C.

## Patentansprüche

1. Verfahren zur Herstellung einer Klebstoffzusammensetzung mit Hilfe eines Extruders, umfassend mindestens zwei Drehschrauben, umfassend aufeinanderfolgend:
- Einführen mindestens eines Weichmachers in den Extruder;
- Entgasen des Weichmachers im Extruder;
- Einführen mindestens eines silylierten Präpolymers, wobei das silylierte Präpolymer in eine Position eingeführt wird, die sich nachgelagert im Extruder mit Bezug auf die Position der Einführung des Weichmachers und mit Bezug auf die Position der Entgasung des Weichmachers im Extruder befindet, und der Mischung desselben mit dem Weichmacher in den Extruder; und
- Entladen der Mischung des Extruders.

2. Verfahren nach Anspruch 1, wobei der Extruder ein Extruder mit zwei gleichläufigen ineinandergreifenden Schrauben ist.

3. Verfahren nach Anspruch 1 oder 2, wobei der Extruder eine Geometrie aufweist, der durch den Bezug des Außendurchmessers der Schrauben zum Innendurchmesser der Schrauben De/Di im Bereich von 1,3 bis 1,8, vorzugsweise von 1,55 bis 1,8 definiert ist; und/oder wobei der Extruder eine Länge aufweist, die von einem Vielfachen des Durchmessers D der Schrauben im Bereich von 28D bis 100D, vorzugsweise von 40D bis 80D, definiert ist.

4. Verfahren nach einem der Ansprüche 1 bis 3, wobei das silylierte Präpolymer eine Hauptkette aufweist, ausgewählt aus einer Polyether-Hauptkette, einer Polyether-Polyurethan-Hauptkette, einer Polyester-Hauptkette, einer Polyester-Polyurethan-Hauptkette, einer Polyether-Polyester-Polyurethan-Hauptkette, einer Polyolefin-Hauptkette, einer Polyolefin-Polyurethan-Hauptkette, einer Polyether-Polyolefin-Polyurethan-Hauptkette, einer Polyacrylat-Hauptkette und einer Polyether-Polyacrylat-Hauptkette, und zwei hydrolisierbare Alkoxysilanendgruppen umfasst; und wobei vorzugsweise das silylierte Präpolymer ein Präpolymer vom Typ Polyether oder Polyether-Polyurethan ist, umfassend zwei hydrolisierbare Alkoxysilanendgruppen.

5. Verfahren nach einem der Ansprüche 1 bis 4, wobei das silylierte Präpolymer ein Präpolymer mit der Formel (1) ist: 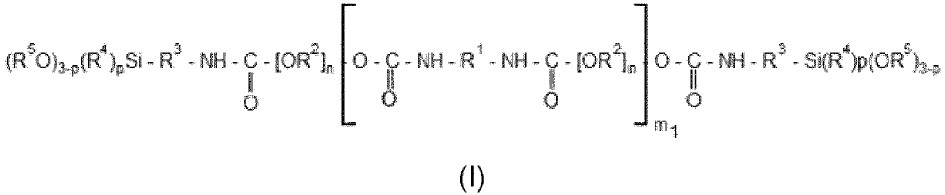 wobei:
- R¹ ein divalentes Kohlenwasserstoffradikal darstellt, umfassend von 5 bis 15 Kohlenstoffatome, das aromatisch oder aliphatisch, linear, verzweigt oder cyclisch sein kann;
- R² ein lineares oder verzweigtes divalentes Alkylenradikal darstellt, umfassend von 1 bis 4 Kohlenstoffatome;
- R³ ein lineares divalentes Alkylenradikal darstellt, umfassend von 1 bis 3 Kohlenstoffatome;
- R⁴ und R⁵, identisch oder verschieden, jeweils ein lineares oder verzweigtes Alkylradikal mit 1 bis 20, vorzugsweise mit 1 bis 4 Kohlenstoffatomen darstellt, mit der Möglichkeit, wenn mehrere Radikale R⁴ oder R⁵ vorhanden sind, dass diese identisch oder verschieden sind;
- n eine ganze Zahl ist, so dass zahlenmäßig die mittlere Molmasse des Polyetherblocks der Formel -[OR²]ₙ- im Bereich zwischen 300 Da und 30 kDa liegt;
- m₁ eine ganze Zahl von null oder nicht null ist;
- n und m₁ derart sind, dass zahlenmäßig die mittlere Molmasse des Polymers der Formel (1) im Bereich zwischen 600 Da und 60 kDa liegt;
- p eine ganze Zahl gleich 0, 1 oder 2 ist;
und vorzugsweise umfassend eine Viskosität, gemessen bei 23 °C, die im Bereich von 25 bis 100 Pa.s liegt;
oder wobei das silylierte Präpolymer ein Polyether mit der Formel (VI) ist: 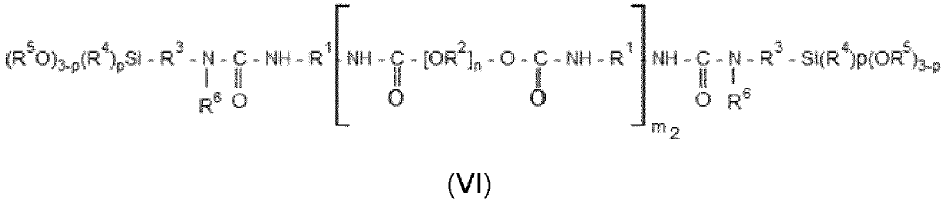 wobei:
- R₁ ein divalentes Kohlenwasserstoffradikal darstellt, umfassend von 5 bis 15 Kohlenstoffatomen, das aromatisch oder aliphatisch, linear, verzweigt oder cyclisch sein kann;
- R² ein lineares oder verzweigtes divalentes Alkylenradikal darstellt, umfassend von 1 bis 4 Kohlenstoffatome;
- R₃ ein lineares divalentes Alkylenradikal darstellt, umfassend von 1 bis 3 Kohlenstoffatome;
- R₄ und R₅, identisch oder verschieden, jeweils ein lineares oder verzweigtes Alkylradikal mit 1 bis 4 Kohlenstoffatomen darstellt, mit der Möglichkeit, wenn mehrere Radikale R⁴ oder R⁵ vorhanden sind, dass diese identisch oder verschieden sind;
- R⁶ ein Wasserstoffatom, ein Phenylradikal, ein 2-Succinat-Radikal oder ein lineares, verzweigtes oder cyclisches Alkylradikal darstellt, umfassend von 1 bis 6 Kohlenstoffatome;
- n eine ganze Zahl ist, so dass zahlenmäßig die mittlere Molmasse des Polyetherblocks der Formel -[OR²]ₙ- im Bereich zwischen 300 Da und 30 kDa liegt;
- m₂ eine ganze Zahl von nicht null ist;
- n und m₂ derart sind, dass zahlenmäßig die mittlere Molmasse des Polymers der Formel (VI) im Bereich zwischen 600 Da und 60 kDa liegt;
- p eine ganze Zahl gleich 0, 1 oder 2 ist;
und vorzugsweise umfassend eine Viskosität, gemessen bei 23 °C, die im Bereich von 25 bis 100 Pa.s liegt;

6. Verfahren nach einem der Ansprüche 1 bis 5, wobei der Weichmacher ein klebrigmachendes Harz umfasst, vorzugsweise das klebrigmachende Harz zahlenmäßig eine mittlere Molmasse aufweist, die zwischen 200 Da und 10 kDa liegt, und noch bevorzugter ausgewählt ist aus:
- (i) den Harzen, erhalten durch Polymerisation von Terpen-Kohlenwasserstoffen und Phenolen in Anwesenheit von Friedel-Crafts-Katalysatoren;
- (ii) den Harzen, erhalten durch ein Verfahren, umfassend die Polymerisation von Alphamethylstyrol;
- (iii) dem Kolophonium natürlichen oder modifizierten Ursprungs und ihren hydrogenierten, dimerisierten, polymerisierten oder durch Monoalkohole veresterten Derivaten;
- (iv) den Harzen, erhalten durch Hydrogenisierung, Polymerisierung oder Copolymerisierung von ungesättigten aliphatischen Kohlenwasserstoffmischungen, umfassend ungefähr 5, 9 oder 10 Kohlenstoffatome, die aus Erdölfraktionen stammen;
- (v) den Terpenharzen;
- (vi) den Copolymeren auf der Basis von natürlichen Terpenen; und
- (vii) den Acrylharzen, umfassend eine Viskosität bei 100 °C von weniger als 100 Pa.s.

7. Verfahren nach einem der Ansprüche 1 bis 6, wobei die Massenmenge von silyliertem Präpolymer im Bereich zwischen 20 und 85 %, vorzugsweise 30 bis 75 % liegt, und die Massenmenge von Weichmacher von 15 % bis 80 %, vorzugsweise von 25 % bis 70 % mit Bezug auf die Masse der Klebezusammensetzung liegt.

8. Verfahren nach einem der Ansprüche 1 bis 7, wobei die Klebstoffzusammensetzung keinen Retikulationskatalysator aufweist.

9. Verfahren nach einem der Ansprüche 1 bis 7, wobei die Klebstoffzusammensetzung einen Retikulationskatalysator umfasst, wobei das Verfahren das Einführen des Katalysators und sein Mischen mit dem Weichmacher und dem silylierten Präpolymer umfasst, wobei dieses Einführen vorzugsweise im Extruder durchgeführt wird, noch weiter bevorzugt zwischen dem Einführen des silylierten Propolymers und dem Entladen, wobei die Massenmenge des Retikulationskatalysators vorzugsweise im Bereich von 0,01 % bis 8 %, bevorzugter von 0,1 % bis 2 % mit Bezug auf die Masse der Klebezusammensetzung liegt.

10. Verfahren nach einem der Ansprüche 1 bis 9, wobei die Aufenthaltsdauer des Weichmachers im Extruder von 0,1 bis 3 Minuten, vorzugsweise von 0,5 bis 2,5 min., noch weiter bevorzugt von 1 bis 2 min. beträgt.

11. Verfahren nach einem der Ansprüche 1 bis 10, wobei der Weichmacher, nachdem er dem Entgasen unterzogen wurde, eine Massenmenge Wasser enthält, die kleiner oder gleich 500 ppm, vorzugsweise kleiner oder gleich 300 ppm, vorzugsweise kleiner oder gleich 200 ppm, noch bevorzugter kleiner oder gleich 100 ppm ist; und/oder der Weichmacher, vor dem Entgasen, eine Massenmenge Wasser enthält, die grösser oder gleich 500 ppm, vorzugsweise grösser oder gleich 1000 ppm, noch weiter bevorzugt grösser oder gleich 2000 ppm ist.

12. Verfahren nach einem der Ansprüche 1 bis 11, umfassend außerdem einen oder mehrere Schritte des Einführens eines oder mehrerer Zusammensetzungen in den Extruder, ausgewählt aus den Antioxidantien, den Feuchtigkeitsfängern, den thermoplastischen Polymeren, den Weichmachern, den Paraffin- und Naphtenölen, den Wachsen eines Polyethylen-Homopolymers, den Wachsen eines Polyethylen- und Vinylacetat-Copolymers, den Pigmenten, den Farbstoffen und den Ladungen.

13. Verfahren nach einem der Ansprüche 1 bis 12, wobei die Temperatur des Extruders beim Entgasen des Weichmachers von 5 °C bis 100 °C über des Kugel-Ring-Erweichungs-Temperatur des Weichmachers, gemessen gemäß der Norm ISO 4625, beträgt.

14. Verfahren nach einem der Ansprüche 1 bis 13, umfassend außerdem eine oder mehrere zusätzliche Entgasungen, und umfassend vorzugsweise mindestens ein zusätzliches Entgasen nach dem Mischen des silylierten Präpolymers mit dem Weichmacher.

15. Verfahren nach einem der Ansprüche 1 bis 14, wobei sich die Temperatur des Extruders vom Zeitpunkt des Einführens des Weichmachers bis zum Zeitpunkt des Entladens von der Umgebungstemperatur bis zu einer maximalen Temperatur Tmax beim Entgasen des Weichmachers erhöht, wobei Tmax vorzugsweise im Bereich zwischen 150 °C und 220 °C liegt, bevorzugter zwischen 160 °C und 180 °C, noch bevorzugter zwischen 165 °C und 175 °C beträgt, und wobei Tmax noch weiter bevorzugt ungefähr 170 °C beträgt; sich dann bis auf eine Endtemperatur Tf beim Entladen verringert, die zwischen der Umgebungstemperatur und Tₘₐₓ liegt, wobei Tf vorzugsweise im Bereich zwischen 80 °C und 145 °C liegt, noch bevorzugter zwischen 120 °C und 140 °C, und wobei Tmax noch weiter bevorzugt ungefähr 130 °C beträgt; und wobei vorzugsweise die Temperatur des Extruders beim Mischen des Präpolymers mit dem Weichmacher Tm im Bereich zwischen Tf und Tmax liegt, wobei Tm vorzugsweise im Bereich zwischen 130 °C und 170 °C liegt, .bevorzugter zwischen 140 °C und 160 °C, noch weiter bevorzugt zwischen 145 °C und 155 °C, wobei Tmax noch weiter bevorzugt ungefähr 150 °C beträgt.

## Claims

1. A method for preparing an adhesive composition, using an extruder having at least two rotating screws, successively comprising:
- feeding at least one plasticizer into the extruder;
- degassing the plasticizer in the extruder;
- feeding at least one silylated prepolymer, the silylated prepolymer being fed at a position located downstream in the extruder relative to the position at which the plasticizer is fed and relative to the degassing position of the plasticizer in the extruder, and mixing the latter with the plasticizer in the extruder; and
- discharging the mixture from the extruder.

2. The method according to claim 1, wherein the extruder is a corotating, meshing twin-screw extruder.

3. The method according to claim 1 or 2, wherein the extruder has a geometry defined by the ratio of the outer diameter of the screws to the inner diameter of the screws, De/Di, being 1.3 to 1.8, preferably 1.55 to 1.8; and/or wherein the length of the extruder is defined by a multiple of the diameter D of the screws, being 28D to 100D, preferably 40D to 80D.

4. The method according to one of claims 1 to 3, wherein the silylated prepolymer has a main chain selected from among a main polyether chain, main polyether-polyurethane chain, main polyester chain, main polyester-polyurethane chain, main polyether-polyester-polyurethane chain, main polyolefin chain, main polyolefin-polyurethane chain, main polyether-polyolefin-polyurethane chain, main polyacrylate chain and main polyether-polyacrylate chain, and comprises two hydrolysable alkoxysilane terminal groups; and preferably the silylated prepolymer is a prepolymer of polyether or polyether-polyurethane type comprising two hydrolysable alkoxysilane terminal groups.

5. The method according to one of claims 1 to 4, wherein the silylated prepolymer is a prepolymer of formula (I): 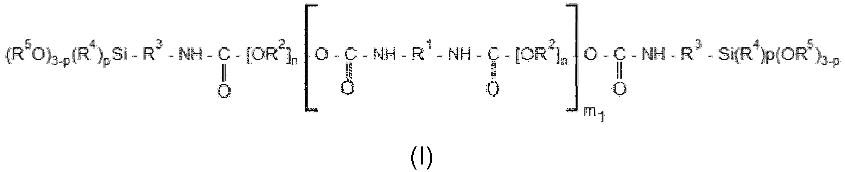 wherein:
- R¹ is a divalent hydrocarbon radical having 5 to 15 carbon atoms that can be aromatic or aliphatic, linear, branched or cyclic;
- R² is a linear or branched, divalent alkylene radical having 1 to 4 carbon atoms;
- R³ is a linear, divalent alkylene radical having 1 to 3 carbon atoms;
- R⁴ and R⁵, the same or different, are each a linear or branched alkyl radical having 1 to 20 carbon atoms, preferably 1 to 4, with the possibility when there are several R⁴ or R⁵ radicals that they can be the same or different;
- n is an integer such that the number average molecular weight of the block polyether of formula-[OR²]ₙ- is between 300 Da and 30 kDa;
- m₁ is a zero or nonzero integer;
- n and m1 are such that the number average molecular weight of the polymer of formula (I) is between 600 Da and 60 kDa;
- p is an integer equal to 0, 1 or 2;
and preferably having a viscosity measured at 23 °C ranging from 25 to 100 Pa.s;
or wherein the silylated prepolymer is a polyether of formula (VI): 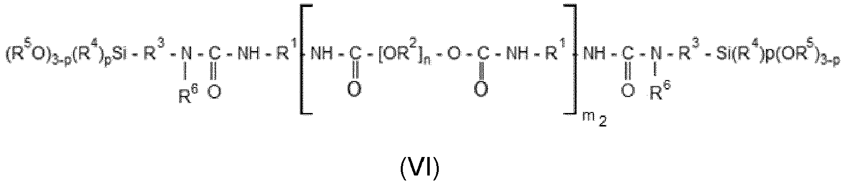 wherein:
- R¹ is a divalent hydrocarbon radical having 5 to 15 carbon atoms that can be aromatic or aliphatic, linear, branched or cyclic;
- R² is a linear or branched, divalent alkylene radical having 1 to 4 carbon atoms;
- R³ is a linear divalent alkylene radical having 1 to 3 carbon atoms;
- R⁴ and R⁵, the same or different, are each a linear or branched alkyl radical having 1 to 4 carbon atoms, with the possibility when there are several R⁴ or R⁵ radicals that they can be the same or different;
- R⁶ is a hydrogen atom, phenyl radical, 2-succinate radical or a linear, branched or cyclic alkyl radical having 1 to 6 carbon atoms;
- n is an integer such that the number average molecular weight of the block polyether of formula-[OR²]ₙ- is between 300 Da and 30 kDa;
- m₂ is a nonzero integer;
- n and m₂ are such that the number average molecular weight of the polymer of formula (VI) is between 600 Da and 60 kDa;
- p is an integer equal to 0, 1 or 2;
and preferably having a viscosity measured at 23 °C ranging from 25 to 100 Pa.s..

6. The method according to one of claims 1 to 5, wherein the plasticizer is or comprises a tackifying resin, preferably the tackifying resin has a number average molecular weight of between 200 Da and 10 kDa and is more preferably selected from among:
- (i) resins obtained by polymerization of terpene hydrocarbons and phenols, in the presence of Friedel-Crafts catalysts;
- (ii) resins obtained with a method comprising polymerization of alpha-methyl styrene;
- (iii) rosins of natural or modified origin, and the derivatives thereof hydrogenated, dimerized, polymerized or esterified by monoalcohols or polyols;
- (iv) resins obtained by hydrogenation, polymerization or copolymerization of mixtures of unsaturated aliphatic hydrocarbons having about 5, 9 or 10 carbon atoms derived from petroleum fractions;
- (v) terpene resins;
- (vi) copolymers containing natural terpenes; and
- (vii) acrylic resins having viscosity at 100 °C lower than 100 Pa.s..

7. The method according to one of claims 1 to 6, wherein the amount by weight of silylated prepolymer is 20 to 85 %, preferably 30 to 75 %, and the amount by weight of plasticizer is 15 % to 80 %, preferably 25 % to 70 %, relative to the weight of the adhesive composition.

8. The method according to one of claims 1 to 7, wherein the adhesive composition is free of crosslinking catalyst.

9. The method according to one of claims 1 to 7, wherein the adhesive composition comprises a crosslinking catalyst, the method comprising adding the catalyst and mixing it with the plasticizer and silylated prepolymer, this addition being preferably made in the extruder, more preferably between the feeding of the silylated prepolymer and discharge, the amount by weight of crosslinking catalyst being preferably 0.01 % to 8 %, more preferably 0.1 % to 2 %, relative to the weight of the adhesive composition.

10. The method according to one of claims 1 to 9, wherein the residence time of the plasticizer in the extruder is 0.1 to 3 minutes, preferably 0.5 to 2.5 min, more preferably 1 to 2 min.

11. The method according to one of claims 1 to 10, wherein the plasticizer, after being degassed, contains an amount of water by weight less than or equal to 500 ppm, preferably less than or equal to 300 ppm, preferably less than or equal to 200 ppm, further preferably less than or equal to 100 ppm; and/or the plasticizer, before degassing, contains an amount of water by weight higher than or equal to 500 ppm, preferably higher than or equal to 1000 ppm, more preferably higher than or equal to 2000 ppm.

12. The method according to one of claims 1 to 11, further comprising one or more steps of feeding into the extruder one or more compounds selected from among antioxidants, moisture scavengers, thermoplastic polymers, plasticizers, paraffinic and naphthenic oils, waxes of a polyethylene homopolymer, waxes of a polyethylene and vinyl acetate copolymer, pigments, colouring agents and fillers.

13. The method according to one of claims 1 to 12, wherein the temperature of the extruder when degassing the plasticizer is 5 °C to 100 °C above the ring-and-ball softening temperature of the plasticizer measured according to standard ISO 4625.

14. The method according to one of claims 1 to 13, further comprising one or more additional degassing operations, and preferably comprising at least one additional degassing after mixing the silylated prepolymer with the plasticizer.

15. The method according to one of claims 1 to 14, wherein the temperature of the extruder, from the feed point of the plasticizer to the discharge point, increases from ambient temperature up to a maximum temperature Tmax when degassing the plasticizer, Tmax being preferably between 150 °C and 220 °C, more preferably between 160 °C and 180 °C, further preferably between 165 °C and 175 °C, and Tmax being still further preferably about 170 °C; and then decreases down to a final temperature Tf when discharging of between ambient temperature and Tmax, Tf being preferably between 80 °C and 145 °C, more preferably between 120 °C and 140 °C, and Tf being further preferably about 130 °C; and wherein the temperature of the extruder when mixing the prepolymer with the plasticizer, Tm, is preferably between Tf and Tmax, Tm being preferably between 130 °C and 170 °C, more preferably between 140 °C and 160 °C, further preferably between 145 °C and 155° C, Tm being still further preferably about 150 °C.
